# EUROPEAN PATENT APPLICATION

(11) **EP 1 387 272 A1**
(43) Date of publication of application: **04.02.2004**
(21) Application number: 02705209.1
(22) Date of filing: 14.03.2002
(51) Int. Cl.: G06F 12/00, G06F 9/06, G06F 13/00, G06F 17/30

(54) **DATA SYNCHRONIZATION SYSTEM, APPARATUS USED FOR THE SYSTEM, AND DATA SYNCHRONIZATION METHOD**

(30) Priority: 16.03.2001 JP 2001076276; 11.09.2001 JP 2001275119
(71) Applicant: Sharp Kabushiki Kaisha, Osaka-shi, Osaka 545-8522 (JP)
(72) Inventor: NAKAGAWA, Katsuya, Soraku-gun, Kyoto 619-0223 (JP); KAMINOKADO, Tsukasa, Tenri-shi, Nara 632-0093 (JP); OTOKAWA, Hideyuki, Yoshino-gun, Nara 638-0831 (JP); KATAYAMA, Michita, Hirakata-shi, Osaka 573-0163 (JP)
(74) Representative: Müller, Frithjof E., Dipl.-Ing.
(86) International application number: PCT/JP2002/002446
(87) International publication number: WO 2002/075549

(57) **Abstract**

A data access system includes a client device (10) connected over a network (5) and being used by a user for registering or displaying data such as a schedule or a memo, and a data server device (1) connected over the network (5) for managing the data currently stored in the client device (10). The client device (10) includes a communication portion (11) for establishing communication with the data server device (1), a client data storing portion (12) storing a part or a whole of server data stored in the data server device (1), an output portion (13) formed of a display device providing character information and movie information to the user and a speaker for outputting a sound or a voice, and a control portion (15) controlling various portions.

## Description

### Technical Field

The present invention relates to a data access system, and particularly to a data access system, in which data stored in a data server device can be utilized as if the data is stored in a client device.

### Background Art

A groupware system has been used as a system for collectively managing data of client devices by a server.

In the groupware system, data such as schedules and memos are registered as group data in a server, and all the users belonging to the same group can refer to the registered schedules. The methods of referring to the group data in this groupware can be roughly classified into two types. In one of the types, when the client device must refer to the group data, the client device is necessarily connected to the server, and refers to data currently stored in the server. In the other type, each client device stores all the group data, and the server performs processing to change the group data stored in each client device when the group data in the server changes.

Japanese Patent Laying-Open No. 2000-148572 has disclosed such a method that a communication request issued from a wireless mobile terminal is stored in a message queue while communication is impossible, and communication processing stored in the queue will be executed when the communication becomes possible. Japanese Patent Laying-Open No. 2000-148572 has also disclosed a list updating method of changing a list displayed on a display device of the wireless mobile terminal.

Japanese Patent Laying-Open No. 2000-148691 has disclosed an information synchronizing system. When data updating performed in a client device relates to groupware information, this system matches the groupware information of client devices of related members with each other by utilizing mails.

However, the conventional groupware suffers from the following problems.

In the case where data reference is performed by connecting the client device to the server and referring to the current data (i.e., data stored at this point in time) in the server, when a change occurs in the group data managed in the server, each terminal is not informed of the fact of updating of the group data in the server. This results in a problem that the user cannot notice the update of the group data unless the user accesses the group data in the server in view of possibility of the updating. Further, communication occurs every time the client device refers to the group data. This results in a problem that traffic on the network increases.

In another system, the client device has stored all the group data, and the group data in each client device is changed when the group data in the server changes. In this case, each client must have a storage capacity for completely storing the group data. When the group data in the server changes, the group data in all the clients must be updated. This increases the traffic on the network.

Japanese Patent Laying-Open No. 2000-148572 has not disclosed a technique for efficiently updating data in a wireless mobile terminal by a server. Further, this reference neither discloses nor suggests a method of storing a complicated relationship between an original of data of each wireless mobile terminal stored in the server and the data in each wireless mobile terminal. Therefore, this reference cannot provide a solution.

In Japanese Patent Laying-Open No. 2000-148691, each client cannot use a storage region of the server as if it is the storage region of the client itself. Therefore, each client cannot handle data other than that in the storage region, which is actually provided in each client. Each client must have a groupware managing table and a managing function for managing the group data to be synchronized. This increases a load on the client side. When group data is updated in a certain client, all the client device are notified of contents of this update. This increases traffic on the network.

Even if the technologies disclosed in these Japanese Patent Laying-Open No. 2000-148572 and No. 2000-148691 are merely combined, communication to every client device occurs in response to every update of the group data, and it is impossible to overcome the problem of increase in traffic on the network. It is also impossible to achieve various kinds of communication service while reducing a load on each client device.

Accordingly, an object of the invention is to provide a data server device, a client device and a data access system, which allow users to utilize information by client devices without increasing network traffic.

Another object of the invention is to provide a data server device, a client device and a data access system allowing a user to utilize information, which is larger in amount than an actual storage capacity of a user's client device, by using the user's client device.

Still another object of the invention is to provide a data server device, a client device and a data access system, which allow a user to utilize information meaningful or relevant to the user by using a user's client device.

Yet another object of the invention is to provide a data server device, a client device and a data access system, which allow a user to utilize information by using a user's client device while ensuring security.

Further another object of the invention is to provide a data server device, a client device and a data access system, which allow a user to utilize information by using a user's client device when required.

### Disclosure of the Invention

According to an aspect of the invention, a data server device includes a server data storing portion storing server data to be utilized by one or a plurality of client device(s) and a correlation between the server data and the client device(s), and a client storage data managing portion connected to the server data storing portion and managing client data currently stored in the client device.

According to another aspect of the invention, a data server device includes a server data storing portion storing server data to be utilized by one or a plurality of client device(s) and a correlation between the server data and the client device(s), and a client storage data managing portion connected to the server data storing portion, managing client data currently stored in the client device, and updating the client data currently stored in the client device capable of access to the server data when the server data stored in the server data storing portion is updated.

Since the update processing can be effected only on the client device(s), which have stored a portion subjected to data updating in the data server device. Therefore, the network traffic does not increase. The server data storing portion stores the server data to be utilized by the client device. Therefore, the client device can utilize information much larger in amount than an actual storage capacity.

Preferably, the client storage data managing portion manages a state of matching between the client data currently stored in the client device and the server data stored in the server data storing portion.

Since the state of matching between the client data and the server data is determined, it is possible to update the client data only when a difference is present between the client data and server data.

Further preferably, the server data stored in the server data storing portion includes a client device identifier for identifying the client device capable of the access.

Further preferably, the server data stored in the server data storing portion includes a user identifier for identifying a user owning the client device capable of the access.

For each user, it is possible to determine the accessible server data.

Further preferably, the client storage data managing portion manages a correlation between an identifier for identifying a user owning the client device and a group including the user, and the server data stored in the server data storing portion includes a group name of the accessible group.

For each group, it is possible to determine accessible server data.

Further preferably, the client storage data managing portion records an update history in a communication queue when communication with the client device is impossible in an operation of updating the client data.

When the communication with the client device is impossible, the update history is recorded in the communication queue so that the client data can be updated when the communication becomes possible.

Further preferably, the client storage data managing portion will attempt communication with the client data at predetermined intervals when the communication with the client device is impossible in processing of updating the client data.

Further preferably, the server data stored in the server data storing portion is assigned a degree of importance, and the client storage data managing portion updates the client data in accordance with the degree of importance.

Further preferably, the client storage data managing portion operates for the client device capable of accessing the server data stored in the server data storing portion to execute selectively updating of the client data or notification to the client device in accordance with a type of the client device when the server data is updated.

In some cases, the client device having an insufficient performance cannot store the client data when the server data is updated. In such cases, a notification that the server data was updated is provided. In this manner, operations can be performed flexibly depending on the performance of the client device.

Further preferably, the client storage data managing portion operates for the client device capable of accessing the server data stored in the server data storing portion to execute selectively updating of the client data or notification to the client device in accordance with an attribute of the updated server data when the server data is updated.

Further preferably, the client storage data managing portion executes an encryption procedure and an authentication procedure when performing communication with the client device.

It is possible to prevent unauthorized access and others by an malicious user.

Further preferably, access to the server data storing portion from a portion other than the client device is allowed.

It is possible to allow entry into a network of an ASP (Application Service Provider) other than the client devices.

According to further another aspect of the invention, a client device includes a client data storing portion storing client data formed of a part or a whole of server data stored in a server data storing portion of a data server device; and a control portion connected to the client data storing portion, determining whether intended data is stored in the client data storing portion or not, and reading the data from the client data storing portion or the server data storing portion of the data server device based on results of the determination for utilizing the read data.

It is possible to utilize the server data storing portion of the data server device. Therefore, it is possible to utilize a storage capacity larger than an actual storage capacity of the client device.

Preferably, when the data stored in the client data storing portion is deleted, the control portion notify the data server device of the deletion.

Thereby, the data server device can deletes the server data stored in the server data storing portion.

Further preferably, the control portion will attempt communication with the data server device at predetermined intervals when communication with the data server device is impossible.

Further preferably, the control portion changes conditions relating to whether the client data stored in the client data storing portion can be deleted or not, depending on an attribute of the server data stored in the server data storing portion of the data server device.

For example, when the server data is to be utilized by the client device formed of a mobile telephone, it is possible to inhibit deletion of data of a telephone book.

Further preferably, the control portion changes conditions relating to whether the client data stored in the client data storing portion can be deleted or not, depending on an attribute of the client data stored in the client data storing portion.

Further preferably, the control portion updates the server data stored in the server data storing portion of the data server device when the client data stored in the client data storing portion is updated.

Further preferably, the control portion adds the server data to the server data storing portion of the data server device when the client data is added to the client data storing portion.

Thereby, the client data and the server data can be synchronized with each other.

Further preferably, the control portion stores an update history in a communication queue when communication with the data server device is impossible.

When the communication with the data server device is impossible, the update history is recorded in the communication queue. Thereby, the server data can be added to the server data storing portion of the data server device when the communication becomes possible.

Further preferably, when communication with the data server device is impossible, the control portion will perform the communication after it is detected that the communication with the data server device becomes p ossible.

Further preferably, the client data stored in the client data storing portion is assigned a degree of importance, and the control portion selectively executes or does not execute the updating of the server data stored in the server data storing portion of the data server device based on the degree of importance when the client data stored in the client data storing portion is updated.

Further preferably, the client data stored in the client data storing portion is assigned a degree of importance, and the control portion selectively adds or does not add the server data to the server data storing portion of the data server device based on the degree of importance when the client data is added to the client data storing portion.

Further preferably, the control portion notifies the user of the updating of the client data when the client data stored in said client data storing portion is updated by reflecting the update of the server data in the server data storing portion of the data server device.

It is possible to call a user's attention.

Further preferably, the control portion executes an encryption procedure and an authentication procedure for communication with the data server device.

It is possible to prevent unauthorized access and others by an malicious user.

According to further another aspect of the invention, a data access system includes the data server device described above and the client device described above.

Preferably, the server data stored in the server data storing portion of the data server device includes an application program.

Further preferably, the server data stored in the server data storing portion of the data server device includes a configuration file of the application program.

By sharing the configuration file of the program, it becomes easy, for example, to share personal setting of a program tool bar and bookmarks between the client devices of the same user, and to resume a game, which was played on a certain client device, on another client device.

According to further another aspect of the invention, a data synchronizing method of synchronizing server data and client data is used in a data access system including a data server device storing the server data to be utilized by one or a plurality of client device(s) and a correlation between the server data and the client device(s), and a client device connected to the data server device over a network, and storing the client data formed of a part or the whole of the server data. The data synchronizing method includes the steps of determining a state of matching between the server data stored in the data server device and the client data stored in the client device by the data server device; providing a notification about data updating to the data server device when the client data stored in the client device is updated; providing a notification about the fact of updating of the data to other client device(s) storing data, as the client data, including an updated portion of the data when the data server device receives the notification about the data updating from the client device; and updating the client data of the other client device(s).

Thereby, the client data can be synchronized with the server data.

According to further another aspect of the invention, a computer-readable record medium stores a program for achieving a data server function by a computer. The program provides the computer with functions as a server data storing unit storing server data to be utilized by one or a plurality of client device(s) and a correlation between the server data and the client device(s), and a client storage data managing unit for managing client data currently stored in the client device.

According to further another aspect of the invention, a computer-readable record medium stores a program for achieving a data server function by a computer. The program provides the computer with functions as a server data storing unit storing server data to be utilized by one or a plurality of client device(s) and a correlation between the server data and the client device(s), and a client storage data managing unit for managing client data currently stored in the client device, and updating the client data currently stored in the client device capable of accessing the server data stored in the server data storing means when the server data is up dated.

Updating processing can be effected on only the client devices currently storing a portion of the data, which is updated in the data server device. Therefore, the network traffic does not increases. Further, the server data storing portion stores the server data to be utilized by the client device. Therefore, the client device can utilize information much larger in amount that an actual storage capacity.

According to further another aspect of the invention, a computer-readable record medium stores a program for achieving a client function by a computer. The program provides the computer with functions as a client data storing unit storing client data formed of a part or the whole of server data stored in a server data storing portion of a data server device, and a control unit for determining whether the client data storing portion has stored intended data or not, and reading the data from the server data storing portion of the data server device or the data server device based on a result of the determination for utilizing the data.

The server data storing portion of the data server device can be utilized. Therefore, it is possible to utilize a storage capacity exceeding an actual storage capacity of the computer achieving the client function.

According to further another aspect of the invention, a data server device includes a server data storing portion storing server data to be utilized by one or a plurality of client device(s) and a correlation between the server data and the client device(s), and a processing determining portion connected to the server data storing portion for determining processing for the client data stored in the client device based on the correlation.

When the data server device receives a client data update notification from the client device, and updates the server data based on the received notification, processing is performed, for example, to extract the client devices for reflecting the updating based on the correlation between the server data and the client device. Information for updating the client data is sent only to the extracted client devices. Therefore, the client data stored in the client devices requiring the updating can be updated based on the predetermined correlation.

Further preferably, the data server device further includes a client device data storing portion storing client device data representing features of the client devices. The client devices fall into a plurality of categories based on the client device data. The server data fall into a plurality of data categories based on the server data. The server data storing portion establishes correspondence between the data categories and the device categories. By establishing the correspondence between the server data and the client devices, the server data storing portion stores the correlation between the server data and the client device.

For example, the client devices fall into the plurality of device categories based on file formats of images, which can be displayed by the devices, and the server data representing the images fall into the plurality of data categories based on the file formats. Based on the correlation between the data categories and the device categories, the client devices capable of displaying the image data are extracted, and the image data stored in the extracted client devices can be updated.

Further preferably, the data server device further includes a user data storing portion storing user data representing features of users using the client devices. The users fall into a plurality of user categories based on the user data. The server data fall into a plurality of data categories based on the server data. The server data storing portion establishes the correspondence between the data categories and the user categories, and stores the correlation between the server data and the client devices.

For example, the users using the client devices fall into a plurality of user categories based on user's favorite foods and drinks, and server data for showing restaurants fall into a plurality of data categories based on the foods and drinks. When the server data showing the foods and drinks is updated, processing is performed to extract the users, who like the foods and drinks provided by the restaurants in the updated server data, and the server data stored in the client devices used by the extracted users can be updated.

Further preferably, the server data fall into the plurality of data categories based on at least one of a type of an application utilizing the server data, a degree of importance of the data and a data notifying method.

When the server data is updated in accordance with a request made by the client device, processing to be effected on the client data is determined, e.g., based on the data category determined based on the degree of importance of the server data.

Further preferably, the client devices fall into the plurality of device categories based on at least one of a type of the client device, a display performance of the client device and a type of a communication path between the data server device and the client device.

When the server data is updated in accordance with a request made by the client device, processing to be effected on the client data is determined, e.g., based on the device category determined based on the type of the client device.

Further preferably, the users fall into the plurality of user categories based on at least one of a group containing the user, liking of the user and user's setting information in the client device.

When the server data is updated in accordance with a request made by the client device, processing to be effected on the client data is determined, e.g., based on the user category determined based on the group of the user using the client device.

Further preferably, the group containing the user can be prepared, edited and deleted by the client devices. The data server device further includes an inquiring portion sending an inquiry to the related client device about whether registration in a new group is possible or not, when the new group is prepared, and a group registering portion responding to the inquiry by the inquiring portion by registering, in the new group, the user of the client device responding that the registration is possible.

The processing to be effected on the client data is determined based on the user categories. When the new group for classifying such user categories is prepared, an inquiry is sent to the client devices. Only the users responding to such inquiry are registered in the new group. Such a situation does not occur that the user is placed in the new group without noticing it.

Further preferably, the processing determining portion determines processing such that data updating the client data currently stored in the client device as well as notification information representing a method determined based on the correlation for notifying the user about the fact of updating of the client data are sent to the client device extracted based on the correlation.

The notifying method of notifying the user of the client device about the data updating is determined based on the correlation. Thereby, the notifying method can be selected, e.g., from alarming at a high-volume level, a beep, only display and others based on, e.g., the degree of importance of the server data.

Further preferably, the processing determining portion determines processing such that data updating the client data currently stored in the client device as well as erasing information representing a method determined based on the correlation for erasing the updated client data are sent to the client device extracted based on the correlation.

For the user of the client device, the method of erasing the data is determined based on the correlation. Thereby, the data erasing method can be selected from a method of erasing the data after one day from the updating, a method of erasing the data after one week from the updating and others, based on the degree of importance of the server data.

According to further another aspect of the invention, a client device includes a client data storing portion storing client data formed of a part or the whole of server data stored in a server data storing portion of a data server device; a receiving portion receiving update information including updated client data and notification information from the data server device; a notifying portion notifying a user of the client device that the client data was updated; and a control portion connected to the client data storing portion, the receiving portion and the notifying portion, and controlling the client data storing portion and the notifying portion to store the updated client data included in the update information received by the receiving portion in the client data storing portion, and notify the user about the updating of the client data, based on the notification information included in the update information.

Based on the update information received from the data server device, the client device sends a notification by alarming at a high-volume level, a beep, only display or the like.

According to further another aspect of the invention, the client device includes a client data storing portion storing client data formed of a part or the whole of server data stored in a server data storing portion of a data server device; a receiving portion receiving update information including updated client data and erase information from the data server device; and a control portion connected to the client data storing portion and the receiving portion, and controlling the client data storing portion to store the updated client data included in the update information received by the receiving portion in the client data storing portion, and erase the client data stored in the client data storing portion based on the erase information included in the update information.

Base on the update information received from the data server device, the client device can erase the updated client data.

According to further another aspect of the invention, a data synchronizing method is used for synchronizing server data and client data with each other in a data access system including a data server device storing the server data to be utilized by one or a plurality of client device(s) and a correlation between the server data and the client device(s), and the client devices connected to the data server device and storing the client data formed of a part or the whole of the server data. The data synchronizing method includes the steps of notifying, by the client device, the data server device about updating of the client data when the client data stored in the client device is updated; extracting the client device as a receiver of information relating to the updating of the client data based on the correlation when the data server device is notified if the data updating by the client device; sending, by the data server device, the information relating to the update of the client data to the extracted client device to the data server device; receiving the information relating to the update and sent from the data server device by the client device; and updating the client data by the client device based on the received information relating to the update.

Thereby, the client data and the server device can be synchronized with each other based on the correlation prestored in the data server device.

Further preferably, the step of sending the information relating to the update by the data server device includes a step of sending update information including data updating the client data currently stored in the client device and notification information representing a method, determined based on the correlation, of notifying the user about the fact of the update of the client data. The data synchronizing method further includes a step of notifying the user about the updating of the client data based on the notification information included in the update information.

Based on the update information received from the data server device, the client device can send a notification by alarming at a high-volume level, a beep, only display or the like.

Further preferably, the step of sending the information relating to the update by the data server device includes a step of sending update information including data updating the client data currently stored in the client device and erase information representing a method, determined based on the correlation, of erasing the updated client data. The data synchronizing method further includes a step of erasing the updated client data based on the erase information included in the update information.

Based on the update information received from the data server device, the client device can erase the updated client data.

According to further another aspect of the invention, a computer-readable record medium stores a program for achieving a data server function by a computer. The program provides the computer with functions as a server data storing unit storing server data to be utilized by one or a plurality of client device(s) and a correlation between the server data and the client device(s), and a processing determining unit for determining processing to be effected on the client data stored in the client device based on the correlation.

When the server data is updated based on the client data update notification provided from the client device, processing, e.g., of extracting the client devices, on which the update must be reflected, is performed based on the correlation between the server data and the client device. Information for updating the client data is sent only to the client device thus extracted. Since network traffic does not increase, it is possible to update the client data, which is stored in the client device and is to be updated, based on the predetermined correlation.

According to further another aspect of the invention, a computer-readable record medium stores a program for achieving a client function by a computer. The program provides the computer with functions as a client data storing unit storing client data formed of a part or the whole of server data stored in a server data storing portion of a data server device, a receiving unit receiving update information including updated client data and notification information from the data server device, a notifying unit notifying a user of the client device that the client data was updated, and a control unit controlling the client data storing unit and the notifying unit to store the updated client data included in the update information received by the receiving unit in the client data storing unit, and notify the user about the updating of the client data based on the notification information included in the update information.

Based on the update information received from the data server device, the client device sends a notification by alarming at a high-volume level, a beep, only display or the like.

According to further another aspect of the invention, a computer-readable record medium stores a program for achieving a client function by a computer. The program provides the computer with functions as a client data storing unit storing client data formed of a part or the whole of server data stored in a server data storing unit of a data server device, a receiving unit receiving update information including updated client data and notification information from the data server device, and a control unit controlling the client data storing unit to store the updated client data included in the update information received by the receiving unit in the client data storing unit, and erase the client data stored in the client data storage unit based on the erasing information included in the update information.

Based on the update information received from the data server device, the client device can erase the updated client data.

### Brief Description of the Drawings

Fig. 1 is a block diagram showing a structure of a data access system according to a first embodiment of the invention.
Fig. 2 is a block diagram showing a structure of a data server device according to the first embodiment.
Fig. 3 is a block diagram showing a structure of a client device according to the first embodiment.
Figs. 4A and 4B show outer appearances of the client device according to the first embodiment.
Fig. 5 is a flowchart of a whole operation of the data server device according to the first embodiment.
Fig. 6 is a flowchart of processing of reflecting updated data in another client device by the data server device according to the first embodiment.
Fig. 7 is a flowchart of processing of reflecting update of general data by the data server device according to the first embodiment.
Fig. 8 is a flowchart of a whole operation of the client device according to the first embodiment.
Fig. 9 is a flowchart of the data update processing performed in the client device due to the data server device according to the first embodiment.
Fig. 10 is a flowchart of the data update processing performed in the client device due to the client device according to the first embodiment.
Fig. 11 is a flowchart of sever data update processing performed by the client device according to the first embodiment.
Fig. 12 illustrates by way of example a relationship between the server data and the client data according to the first embodiment.
Fig. 13 illustrates, by way of example, storage formats of the server data in the data server device according to the first embodiment.
Fig. 14 illustrates, by way of example, storage formats of terminal data in the data server device according to the first embodiment.
Fig. 15 illustrates, by way of example, storage formats of group data in the data server device according to the first embodiment.
Fig. 16 illustrates formats of a server data update notification sent from the client device for updating the server data stored in the data server device.
Fig. 17 illustrates, by way of example, processing of updating the data in the data access system according to the first embodiment.
Fig. 18 illustrates an example of an address book data according to the first embodiment.
Fig. 19 illustrates another example of the address book data according to the first embodiment.
Fig. 20 illustrates still another example of the address book data according to the first embodiment.
Fig. 21 illustrates yet another example of the address book data according to the first embodiment.
Fig. 22 illustrates further another example of the address book data according to the first embodiment.
Fig. 23 illustrates still further another example of the address book data according to the first embodiment.
Fig. 24 illustrates, by way of example, processing of updating album data in the data access system according to the first embodiment.
Fig. 25 illustrates, by way of example, processing of sending mails in the data access system according to the first embodiment.
Figs. 26 and 27 illustrate, by way of example, server data in the mail sending processing according to the first embodiment.
Figs. 28 - 31 illustrate, by way of example, the server data in the mail sending processing according to the first embodiment.
Fig. 32 illustrates, by way of example, chat processing in the data access system according to the first embodiment.
Fig. 33 illustrates, by way of example, schedule data update processing in the data access system according to the first embodiment.
Fig. 34 is a flowchart of updated data reflecting processing in the client device according to the first embodiment.
Fig. 35 illustrates, by way of example, client data at the time of data deleting processing according to the first embodiment.
Fig. 36 is a block diagram illustrating another structure of the data access system according to the first embodiment.
Fig. 37 is a flowchart of a whole operation of the data server device according to a first modification of the first embodiment.
Fig. 38 is a flowchart of a whole operation of the data server device according to a second modification of the first embodiment.
Fig. 39 illustrates, by way of example, a relationship between the server data and the client data according to the second embodiment of the invention.
Fig. 40 illustrates, by way of example, the storage formats of the server data in the data server device according to the second embodiment.
Fig. 41 illustrates, by way of example, the storage formats of the terminal data in the data server device according to the second embodiment.
Fig. 42 illustrates, by way of example, the storage formats of user data of a user using the data server device according to the second embodiment.
Figs. 43 and 44 illustrate, by way of example, the storage formats of the processing table stored in the data server device according to the second embodiment.
Fig. 45 illustrates contents of the server data storing portion in the data server device according to a third embodiment.
Fig. 46 illustrates a manner of propagation of structured object structured in the third embodiment.
Figs. 47 to 50 illustrate tables and rules for object update processing.
Fig. 51 illustrates a manner of deleting elements of the object structured in the third embodiment.

### Best Modes for Carrying Out the Invention

Embodiments of the invention will now be described with reference to the drawings. In the following description, the same parts bear the same reference numbers as well as the same names, and achieve the same functions. Therefore, description thereof is not repeated.

### First Embodiment

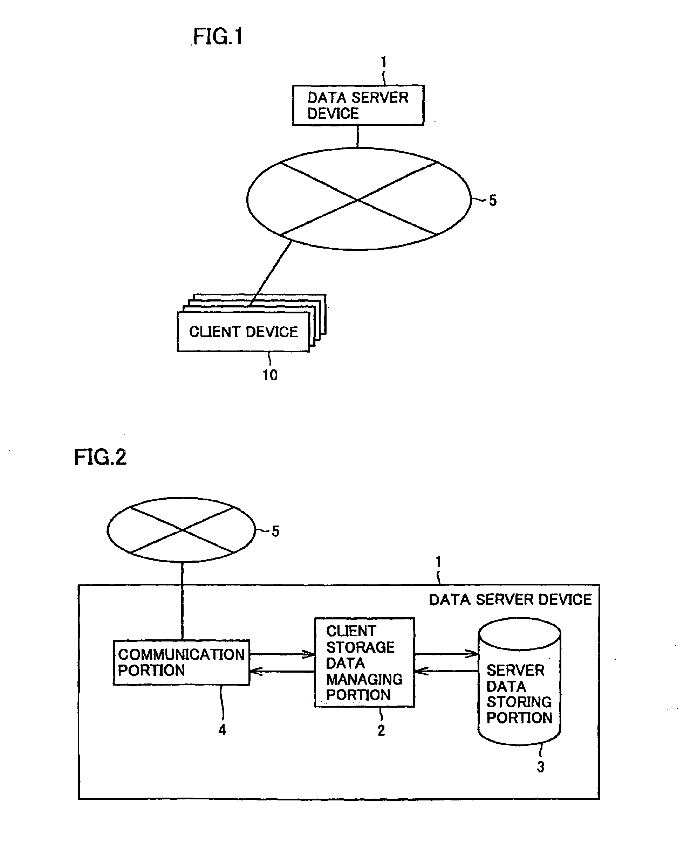

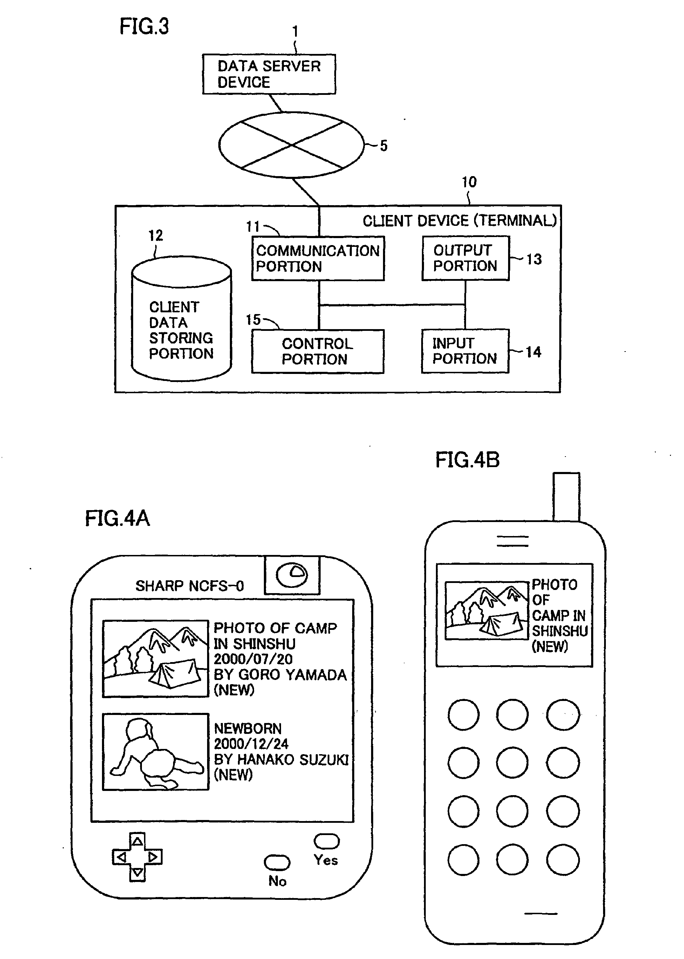

Referring to Fig. 1, a data access system according to a first embodiment includes client devices 10, which are connected to a network 5 such as the Internet, and are used by users for registering and displaying data, e.g., of schedules and memos, as well as a data server device 1 managing the data, which is currently stored in client devices 10.

Referring to Fig. 2, data server device 1 includes a server data storing portion 3 storing server data to be utilized by each client device 10, a client storage data managing portion 2 managing the data currently stored in each client device 10, and a communication portion 4 connected to network 5 and client storage data managing portion 2 for communication with each client device 10.

Referring to Fig. 3, client device 10 includes a communication portion 11 performing communication with data server device 1 over network 5, a client data storing portion 12 storing a part or the whole of the server data stored in server data storing portion 3 of data server device 1, and storing, in some cases, data unique to client device 10, an output portion 13 formed of a display device (not shown) displaying character information and picture information for the user as well as a loud speaker outputting sounds and voices, an input portion 14 formed of a keyboard, buttons, a camera and/or a microphone, and a control portion 15 connected to output portion 13, input portion 14 and the display device for controlling these portions and device.

It can be envisaged to use client device 10 formed of a PDA (Personal Digital Assistants) shown in Fig. 4A or a cellular phone shown in Fig. 4B.

In the above structure, it is assumed that client data storing portion 12 of each client device 10 has stored a part or the whole of the server data stored in server data storing portion 3 of data server device 1. Thus, client device 10 appropriately downloads required server data from data server device 1, and stores it in client data storing portion 12. In principle, client data storing portion 12 of client device 10 stores data, which was used relatively recently. Old data as well as data of less importance are successively deleted from client data storing portion 12. Owing to the above manner, the user can utilize client device 10 as if client device 10 is internally provided with server data storing portion 3 having a large structure capacity of data server device 1.

For example, if client device 10 has a function of a cellular phone, data of a telephone book is not deleted from client data storing portion 12. In this manner, the data is handled in accordance with predetermined rules depending on situations, types of data or the like. Further, control portion 15 of client device 10 is configured to notify data server device 1 about the execution of deleting processing when such processing is executed in client data storing portion 12. Client storage data managing portion 2 of data server device 1 performs management for each client device 10 to determine a portion of the server data, which is stored in client data storing portion 12 of each client device 10.

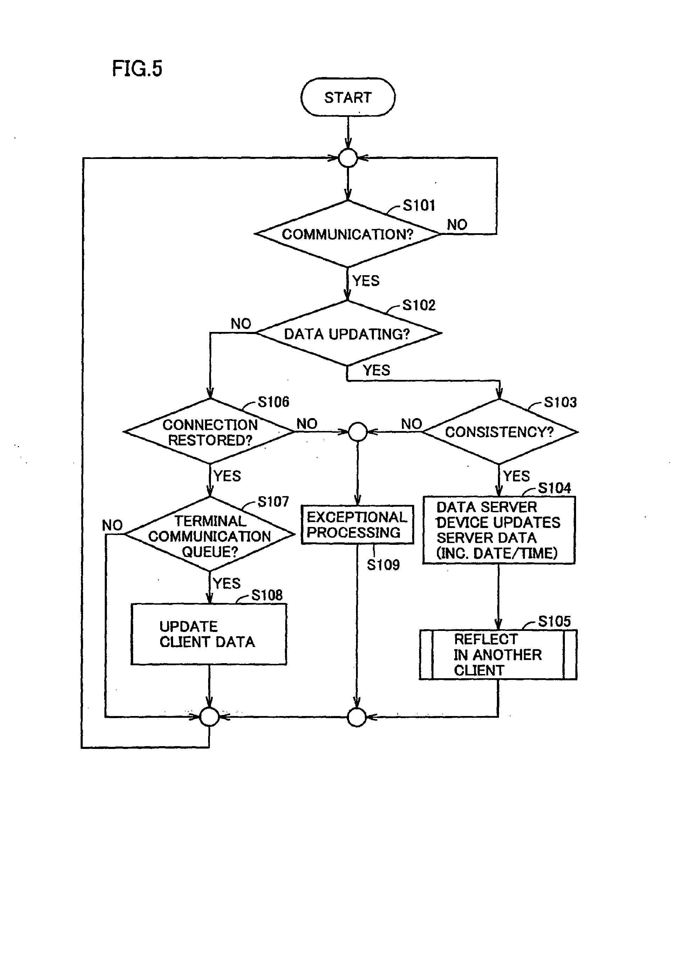

Referring to Figs. 5 to 7, description will now be given on a control structure of a program for achieving the functions of data server device 1.

Referring to Fig. 5, a whole flow of control of data server device 1 is as follows.

Data server device 1 waits for communication from client device 10 (S101). When the communication is established (Yes in S101), it is determined whether the communication data provided from client device 10 requires update of the server data stored in server data storing portion 3 of data server device 1 or not (S102).

If the communication data requires the updating of server data (Yes in S102), client storage data managing portion 2 checks consistency of the update request for the server data (S103). This checking of the consistency is performed, for example, by determining whether a right to access the data to be updated is present or not, whether a conflict has occurred or not, e.g., due to editing in multiple portions (e.g., due to such a situation that the server data forming a base of the update data was already updated when the update data was transferred to client device 10).

When the consistency is present (Yes in S103), client storage data managing portion 2 updates the corresponding server data stored in server data storing portion 3 of data server device 1. At the same time, the date and time of the last update of the server data are updated (S104). Client storage data managing portion 2 effects reflecting processing, which is based on the updated server data, on client devices 10 except for client device 10 sending this update data (S105). This processing will be described later in greater detail. When the reflecting processing (S105) ends, data server device 1 returns to the processing (S101) of waiting for next communication.

When the communication data is not the update request for the server data (No in S102), client storage data managing portion 2 of data server device 1 determines whether the communication data notifies about restoration of connection of client device 10 or not (S 106).

When the communication data notifies about the restoration of connection of client device 10 (Yes in S106), client storage data managing portion 2 determines whether a terminal communication queue relating to client device 10 is present or not (S107). When the terminal communication queue is present (Yes in S107), communication portion 4 performs communication according to contents thereof for updating the client data stored in client data storing portion 12 of client device 10 (S108), and data server device 1 returns to processing (S101) of waiting for next communication. If the terminal communication queue to client device 10 is empty (No in S107), data server device 1 performs no processing and returns to processing (S101) of waiting for next communication.

Exceptional processing (S109) is performed in such a case that the communication data sent from client device 10 is an update request, and consistency is not present (Yes in S102 and No in S103), or in such a case that the communication data is neither a data update request nor connection restoration (No in S102 and No in S106). For example, the exceptional processing is such processing that is performed when the determination of the consistency ended in failure, and thereby is performed by sending a reason of the failure to client device 10 and inquiring about subsequent processing intended by the user. Also, the exceptional processing may be user registering processing, which is performed when the communication data is neither data update nor connection restoration, and is communication requesting user registration of new client device 10.

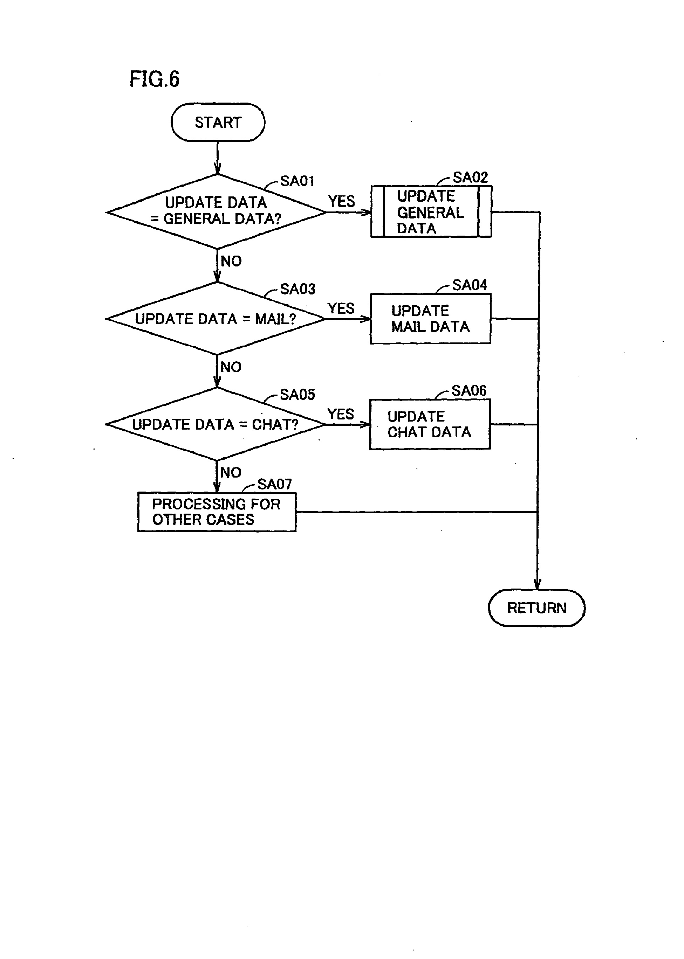

Referring to Fig. 6, reflecting processing (S105) effected on client devices 10 except for client device 10 sending the foregoing update data will now be described in greater detail.

When the update data sent from client device 10 and received by data server device 1 is general data such as schedule data or album data, which does not include special communication processing (Yes in SA01), client storage data managing portion 2 of data server device 1 performs update processing of the general data (SA02). The update processing of the general data will be described later in greater detail.

When the update data is mail data (No in SA01 and Yes in SA03), update processing of the mail data is performed (SA04). In the mail data update processing, one or a plurality of client devices 10, to which the mail data is to be distributed, are determined according to destination information included in the update data. Communication portion 4 sends the update data to client data storing portion 12 of each client device 10 to store the mail data as new mail data. In the case where the user of client device 10, which sent the mail, owns a plurality of client devices 10, the update data is likewise sent to these plurality of client devices 10 to register the mail data as a sent mail (SA04). Client device 10, which received the update data as the destination of the mail data, performs the processing to notify the user about the data as a new mail.

When the update data is chat data (No in SA01, No in SA03 and Yes in SA05), update processing of the chat data is performed. In the update processing of the chat data, one or a plurality of client devices 10 are determined as a distribution destination(s) according to the information about the chat members included in the update data. Communication portion 4 sends the update data to client data storing portion 12 of each client device 10 to keep the chat data as new chat data (SA06). Client device 10 receiving the chat data appropriately performs the processing of displaying the chat data on a chat screen.

If the update data is neither the mail data nor the chat data (No in SA01, No in SA03 and No in SA05), processing predetermined for such data is performed (SA07).

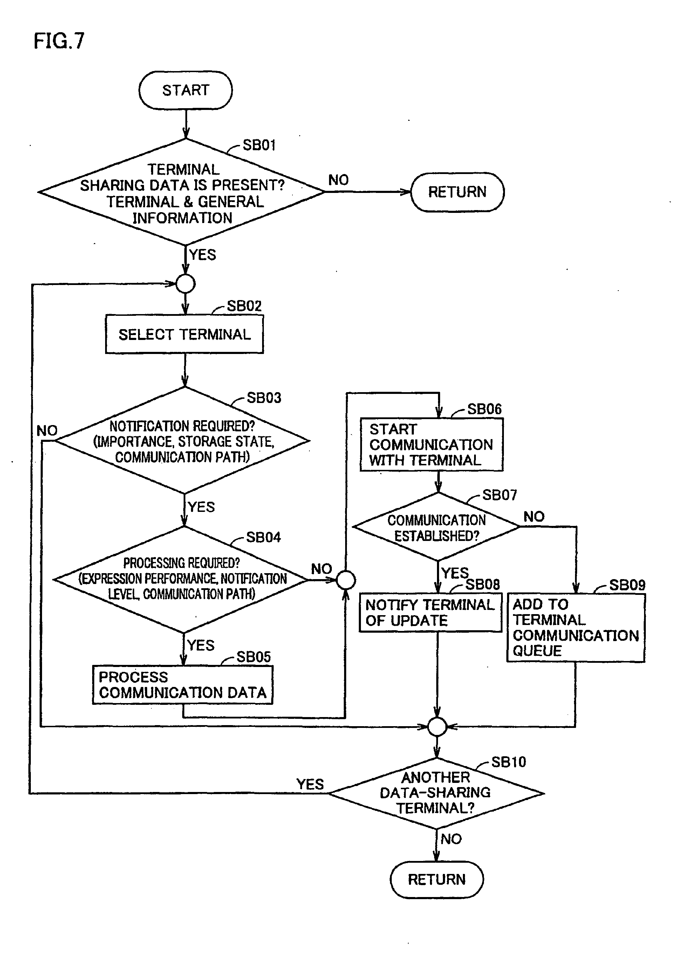

Referring to Fig. 7, if the update data sent from client device 10 and received by data server device 1 is general data, the update processing (SA02) of the general data is performed as described below in greater detail.

Client storage data managing portion 2 of data server device 1 determines whether the general data to be updated is the data to be shared by client devices 10 other than client device 10, which sent the update data, or not (SB01). If there is no client device 10 sharing the data (No in SB01), nothing is executed in this processing.

If a plurality of client devices 10 sharing the data are present (Yes in SB01), one of client devices 10 is selected (SB02). If only one client device 10 is sharing the data (Yes in SB01), this client devices 10 is selected (SB02). Then, it is determined whether a notification about this data update is to be sent to selected client device(s) 10 or not (SB03). This determination is performed as follows. First, it is determined whether the corresponding client data is currently stored in client data storing portion 12 of client device 10 or not. If the corresponding data is not currently stored, it is determined in principle that updating of the client data in client device 10 is not required. However, the above is not true if the degree of importance assigned to the update data is high, or user's setting requires the updating. If client data storing portion 12 of client device 10 has stored the corresponding client data, it is determined in principle that the updating of the client data of this client device 10 is required. However, the above is not true if the degree of importance assigned to the update is high, or a cost of communication with client device 10 is high. In the processing of selecting client device 10 (SB02), client device 10, which was connected last to the server, may be selected first. Thereby, the notification can be sent first to client device 10, which is most likely to be used currently by the user. This improves the convenience.

When the determination (SB03) about the necessity of notification is performed and the necessity of notification is not necessary (No in SB03), checking processing (SB01) starts to determine whether there is further another client device 10 to be shared or not. When it is determined that the notification is required (Yes in SB03), it is then determined whether processing must be effected on the update data to be sent to client device 10 or not (SB04). This determination is performed as follows. Such a case may occur that the performance required for representing contents of the update data exceeds the performance of expression of client device 10. Thus, such a case may occur that the update notification of a color image of 24-bit color is provided to client device 10 capable of display in 8-bit color, or that notification about only a summary of update contents is to be provided when the data size exceeds a predetermined value, according to user's presetting. In these cases, it is determined that manipulation or processing of the data is required. If no problem is present in contents of the update data in connection with user's setting, expression performance of client device 10 and a communication path, it is determined that processing of the data is not required. When it is determined that data processing is necessary (Yes in SB04), communication with client device 10 starts (SB06) after processing the communication data (SB05). If it is determined that the manipulation is not required (No in SB04), the communication with client device 10 immediately starts (SB06).

When an operation for communication with client device 10 starts, and a communication path is successfully established (Yes in SB07), the notification about the update of data is provided to client device 10 (SB08). When establishment of the communication path ends in failure (No in SB07), processing (SB09) of adding this update notification to a terminal communication queue for client device 10 is performed, and checking processing (SB10) is performed to check whether further another client device 10 sharing the data is present or not. If client device(s) 10 sharing the data are further left (Yes in SB10), processing returns to SB02, and the foregoing processing, which starts from selection of client device 10 not yet subjected to the update processing, is successively repeated (No in SB10). If another client device 10 sharing the data is not left when starting the above processing (No in SB10), data server device 10 returns to processing (S101 in Fig. 5) of waiting for next execution of communication. In the above processing, the communication with client device 10 and the updating of the terminal data are immediately attempted when update of the terminal data is required. However, in the case, e.g., of low importance, only addition to the terminal communication queue may be performed without immediately attempting the communication.

In these communication processing, encryption processing and/or terminal authentication procedures are performed for preventing unauthorized access and others by an malicious user. In all communication by data server device 1 and client devices 10, which will be described hereinafter, encryption processing and authentication procedures are appropriately performed if confidentiality must be ensured in the communication. However, the encryption and authentication procedures are known arts, and therefore, description thereof is not repeated.

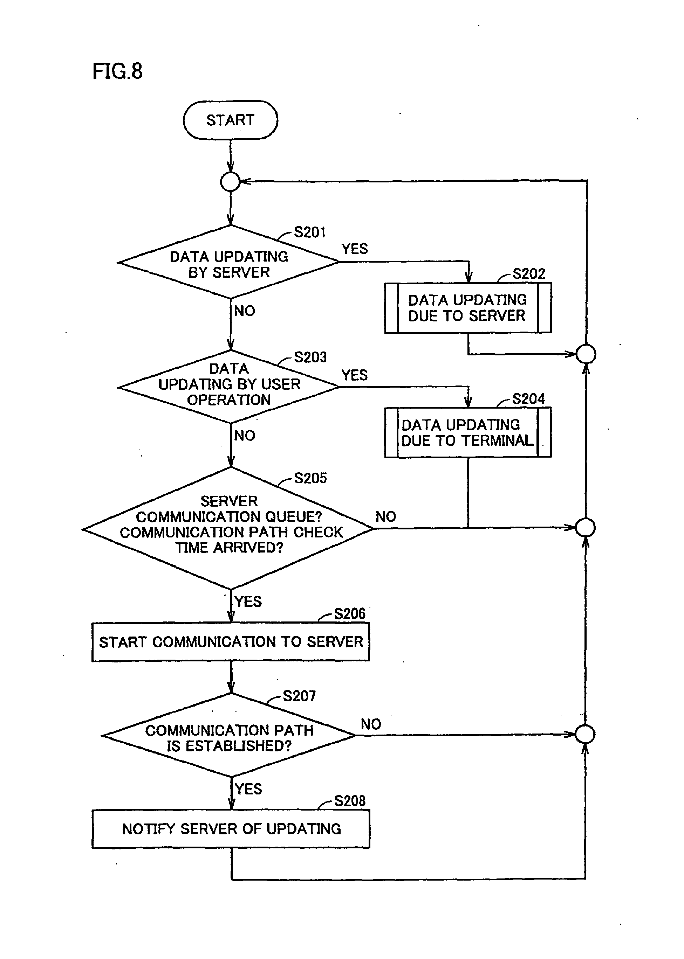

Referring to Fig. 8, an operation of client device 10 will now be described.

Control portion 15 of client device 10 performs client data update processing (S202) of client device 10 due to data server device 1 when it receives a data update request from data server device 1 via network 5 and communication portion 11 (Yes in S201). The client data update processing will be described later in greater detail.

When an user's operation detected by input portion 14 causes an update request for the client data (No in S201 and Yes in S203), the data update processing due to client device 10 is performed (S204). This processing will be described later in greater detail.

If neither the data updating by the server nor the data updating by the user's operation is performed (No in S201 and No in S203), a communication path checking will be performed periodically at time intervals of 30 minutes. When the server communication queue is present (Yes in S205), the communication to the server starts (S206). During a period other than the time for communication path checking, or when the communication path is checked and the server communication queue is not present (No in S205), processing returns to S201.

When connection to the server starts in S206, and the communication path is successfully established (Yes in S207), processing is performed to send the data stored in the server communication queue to data server device 1 (S208). After S208, or when establishment of the communication path ends in failure (No in S207), the processing returns to S201.

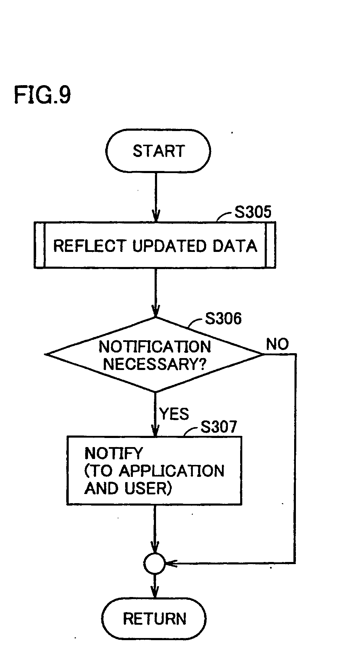

Referring to Fig. 9, description will now be given on the data update processing due to data server device 1 (S202 in Fig. 8).

In response to the data update request, which is transmitted from data server device 1 via network 5 and communication portion 11, control portion 15 updates the data stored in client data storing portion 12 of client device 10 (S305). When the contents of updating are addition of new data, the new data is added to client data storing portion 12, and processing of reflecting the update data is performed. This processing will also be described later in greater detail.

According to the attribute of the data, it is then determined whether the notification is necessary or not (S306). When the notification is necessary (Yes in S306), the notification about the update is provided to an application utilizing this data. When the application is not running, the notification may be provided after booting the application utilizing this data, or after booting the application for providing the update notification, when necessary. At the same time, the notification may be provided to the user by beeping, changing and icon or the like (S307). For this notification, the level of attracting a user's attention may be changed depending on the degree of importance of the data, which will be described later, or a type of the data. This change may be performed, e.g., by varying the degree of change of the icon, turning on/off of the alarm sound, or changing a volume of the alarm sound. In S306, a notification is not provided to the users if the change is, e.g., a correction of an error in data of a time table data, and does not particularly require the notification to the users.

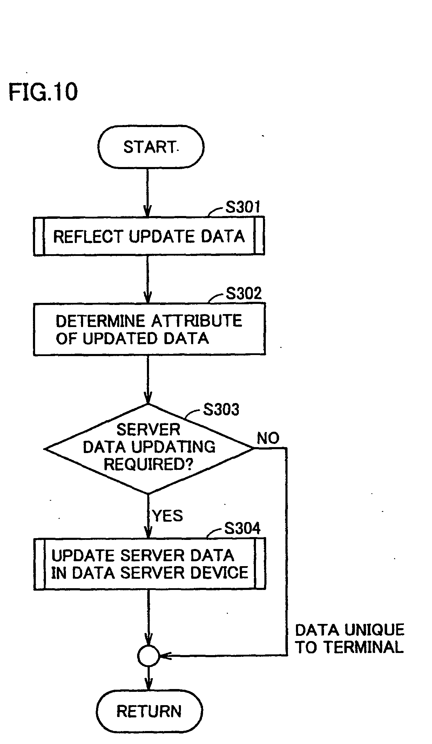

Referring to Fig. 10, description will now be given on the data update processing (S204 in Fig. 8) due to client device 10.

Based on the data, which is updated or newly provided by input portion 14, control portion 15 updates the data in client data storing portion 12, or newly adds the data to client data storing portion 12. Thereby, the processing of reflecting the update data is performed (S301). This processing will be described later in greater detail.

Control portion 15 determines the attribute of the updated data (S302), and determines whether the server data managed in data server device 1 must be updated instead of the data to be stored uniquely to client device 10 or not (S303). It is determined that the updating of the server data is not necessary if the data belongs only to a designated user and is unique to client device 10. For the general user data, however, the server device is to be updated.

If the updating of the server device is required (Yes in S303), update is effected on the server data managed in data server device 1 via communication portion 11 and network 5 (S304). Thereafter, the processing returns to S201 in Fig. 8. If the updating of the server data is not required (No in S303), the processing returns to S201.

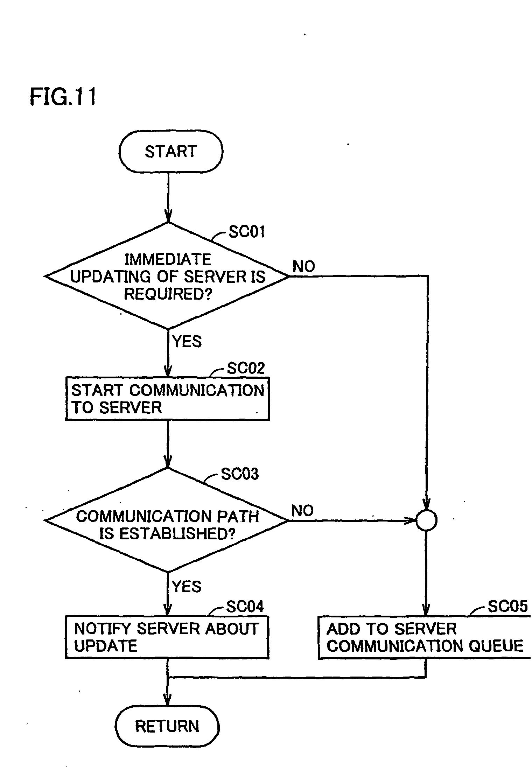

Referring to Fig. 11, description will now be given on the processing (S304 in Fig. 10) of updating the server data of data server device 1 by client device 10.

It is determined whether the updating of server data is immediately required or not, based on a predetermined algorithm such as importance, types and others of the data (SC01).

When it is determined that updating of the server data is immediately required (Yes in SC01), control portion 15 of client device 10 starts the communication with data server device 1 via communication portion 11 (SC02).

When the communication path is successfully established (Yes in SC03), control portion 15 provides a notification to update the corresponding data in server data storing portion 3 of data server device 1 (SC04).

When it is determined that immediate updating of the server device is not required (No in SC01), or when establishment of the communication path ends in failure (No in SC03), control portion 15 adds this update processing request to the server communication queue (SC05). This server communication queue will be processed later in the foregoing step S208. This processing avoids a problem, e.g., as follows. If the updating of the server data is not immediately required in response to the updating of data by the client device, an editing operation can be continuously performed multiple times. This can avoid such a problem that the server data is edited in response to every edition, and thereby a communication charge increases.

In the above communication, encryption processing and user authentication procedures are performed for preventing unauthorized access and others by an malicious user.

Actual operations of the embodiment will now be described in greater detail in connection with the states of data and the steps. In the following description, the client device may be merely referred to as a "terminal" in some cases.

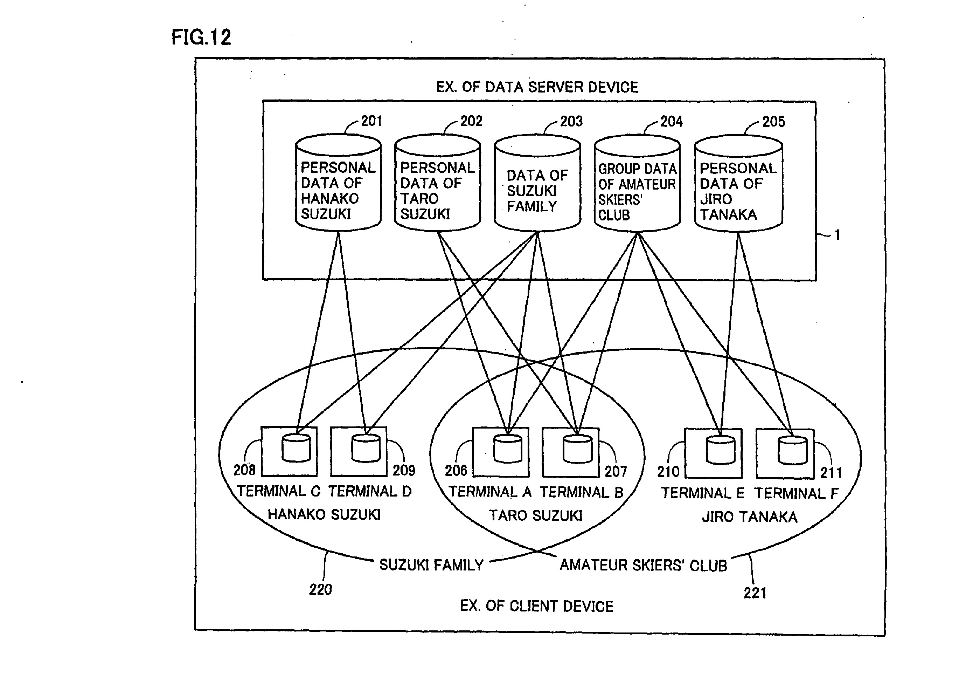

Fig. 12 conceptually illustrates, by way of example, a relationship between the server data stored in server data storing portion 3 of data server device 1 in this embodiment and the client data stored in client data storing portions 12 of the plurality of client devices 10.

In this embodiment, it is assumed that the system is utilized by three persons "Taro SUZUKI", "Hanako SUZUKI" and "Jiro TANAKA". "Taro SUZUKI" and "Hanako SUZUKI" have been married, and both belong to a group 220 called "SUZUKI family", which is managed in data server device 1. "Taro SUZUKI" and "Jiro TANAKA" belong to an amateur skiers' group 221, which is likewise managed in data server device 1.

"Taro SUZUKI" owns client devices, i.e., terminals A206 and B207, "Hanako SUZUKI" owns terminals C208 and D209, and "Jiro TANAKA" owns terminals E210 and F211.

In this case, server data storing portion 3 of data server device 1 manages, as a data set, the server data of "Hanako SUZUKI" personal data 201, "Taro SUZUKI" personal data 202, "SUZUKI family" data 203, amateur skiers' group data 204 and "Jiro TANAKA" personal data 205. It is assumed in Fig. 12 that a correlation, which can be expressed by coupling with straight lines, is present between data sets of the server data in data server device 1 and client data in client devices 10.

For example, client data storing portion 12 of terminal A206 held by "Taro SUZUKI" has stored a part of server data, which is managed as the server data in data server device 1, and relates to each of "Taro SUZUKI" personal data 202, "SUZUKI family" data 203 and amateur skiers' group data 204.

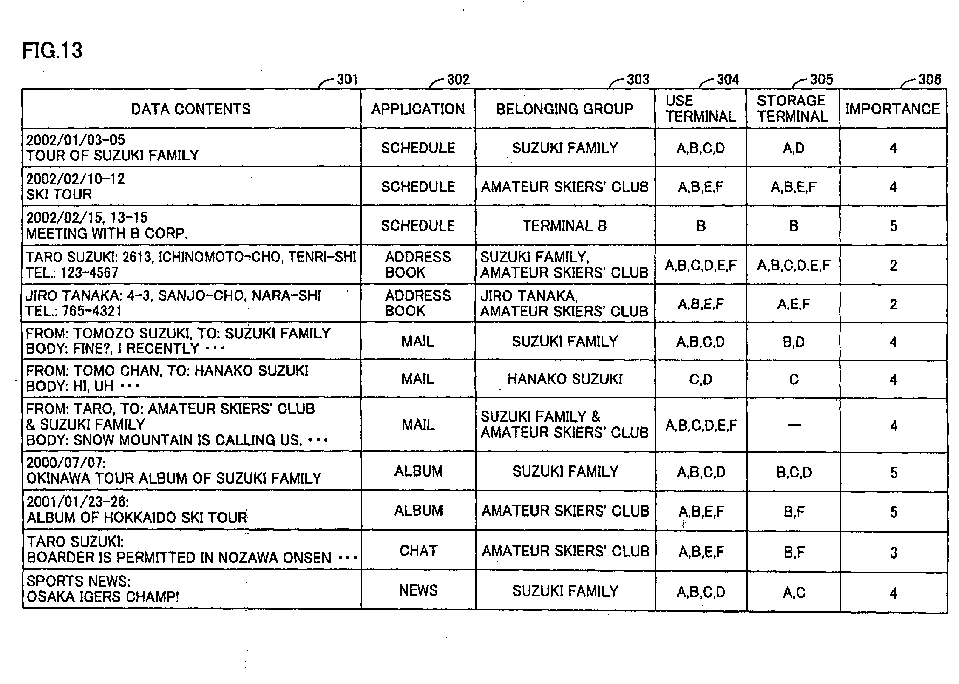

Fig. 13 illustrates, by way of example, data storage formats of the server device stored in server data storing portion 3 of data server device 1. This example is based on the relationship between the respective users, terminals and groups illustrated in Fig. 12.

In this embodiment, it is assumed that each client device 10 is loaded with a schedule application for managing personal and group schedules, an address book application for managing telephone numbers and addresses of acquaintances and friends, a mail application for sending and receiving e-mails and for managing received and sent mails, an album application for managing photograph and movie data, a chat application for achieving a chat in real time between predetermined members, e.g., on a character base, and a news application for appropriately obtaining and managing weather forecasts, news flashes and others. The server data, to which each client device 10 is referred, is stored in formats illustrated in Fig. 13.

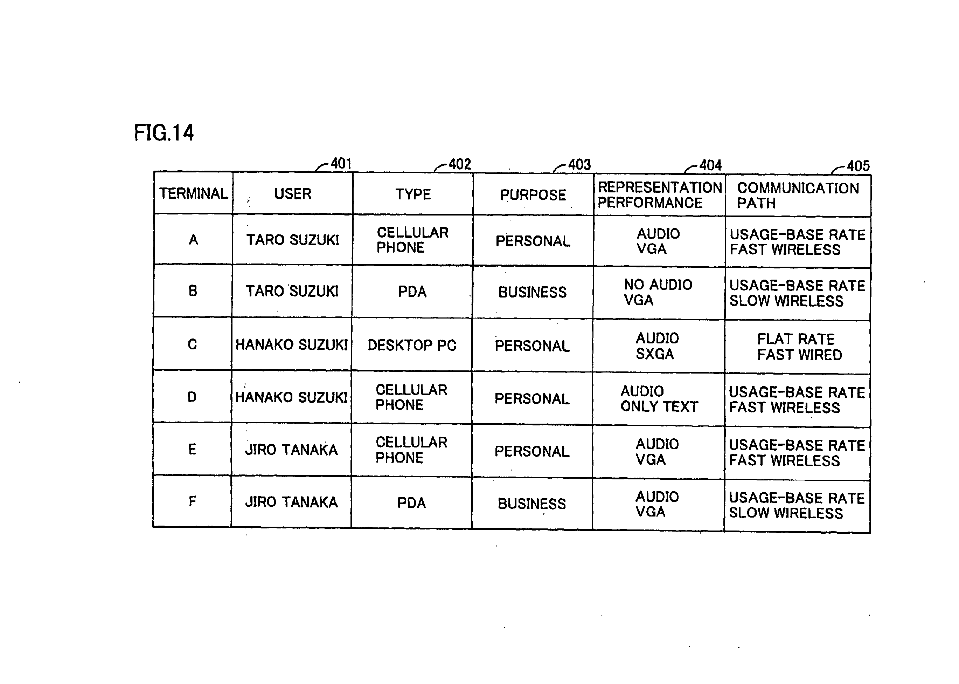

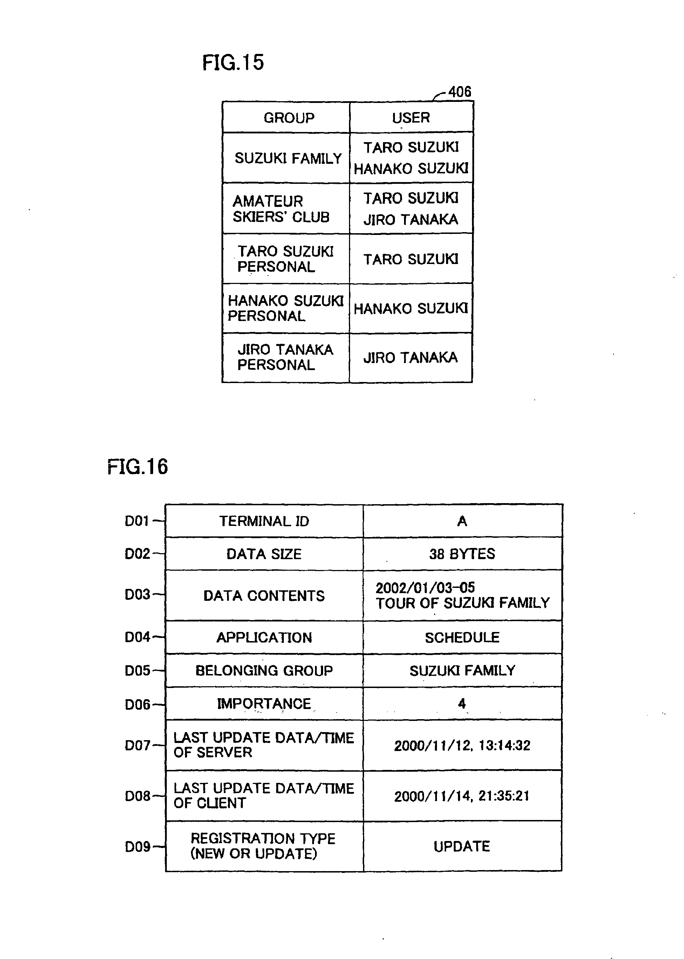

The data unit forming each row in Fig. 13 will be referred to as a "data entry" hereinafter. Each data entry includes data contents 301 of each data entry as well as an application attribute 302 representing an application handling the data entry, a belonging group attribute 303 indicating the group, to which the data entry belongs, a use terminal attribute 304 representing a terminal using the data entry, a storage terminal attribute 305 representing a terminal, which has stored the data entry, and an importance attribute 306 representing a degree of importance of the data entry. The data entries are classified based on the attributes of the data entries, and the data entries having the attributes of the same value are placed in the same category. In view of a table in Fig. 15, which will be described later, it is not essential to assign belonging group attribute 303 to each data. In this embodiment, however, attribute 303 is assigned for easy understanding. Use terminal attribute 304 can be derived from tables in Figs. 14 and 15 to be described later, and therefore, it is not essential to assign it as the attribute of each data. In this embodiment, however, attribute 304 is assigned for easy understanding.

Fig. 14 illustrates, by way of example, data formats for storing attributes of the respective terminals, which are managed in client storage data managing portion 2 of data server device 1.

As illustrated in Fig. 14, client storage data managing portion 2 of data server device 1 stores a table managing various attributes for each terminal, and specifically managing, e.g., a user attribute 401 representing a user owning the terminal, a type attribute 402 representing a specific type of the terminal such as a PC (Personal Computer), a PDA or a cellular phone, a purpose attribute 403 representing an intended purpose of the terminal, a representation performance attribute 404 representing a representation performance of the terminal such as abilities of voice output and/or movie display, and a communication path attribute 405 indicating whether a wireless communication path is used or not, whether a wired communication path is used or not, whether a communication speed is fast or slow, and whether communication is charged at a usage-base rate or a flat rate.

From this table, it can be understood that a terminal A in this embodiment is a cellular phone, which is owned by "Taro SUZUKI" for a personal use, has a fast wireless communication function, and is charged at a usage-based rate. Terminal A is capable of voice output and VGA (Vide Graphics Array) display. Likewise, a terminal B is a PDA, which is owned by "Taro SUZUKI" for a business use, has a slow wireless communication function, and is charged at a usage-based rate. Terminal B is incapable of voice output and has a VGA display performance. A terminal C is a desktop personal computer, which is owned by "Hanako SUZUKI" for a personal use, has a fast wired communication function, and is charged at a flat rate. Terminal C is capable of voice output and SXGA (Super eXtended Graphics Array) display. A terminal D is a cellular phone, which is owned by "Hanako SUZUKI" for a personal use, has a fast wireless communication function, and is charged at a usage-based rate. Terminal D is capable of voice output and only text display. A terminal E is a cellular phone, which is owned by "Jiro TANAKA" for a personal use, has a fast wireless communication function, and is charged at a usage-based rate. Terminal E is capable of voice output and VGA display. A terminal F is a PDA, which is owned by "Jiro TANAKA" for a business use, has a slow wireless communication function, and is charged at a usage-based rate. Terminal F is capable of voice output and VGA display.

Fig. 15 illustrates, by way of example, data storage formats of group data stored in server data storing portion 3 of data server device 1. This example is based on the relationship between the users, terminals and groups illustrated in Fig. 12. As illustrated in Fig. 15, the table stores a correlation between groups and user attributes 406 indicating users belonging to the groups.

It can be understood from this table that "Taro SUZUKI" and "Hanako SUZUKI" belong to the group of "SUZUKI family". Also, "Taro SUZUKI" and "Jiro TANAKA" belong to the group of "amateur skiers' group". "Taro SUZUKI" belongs to "Taro SUZUKI personal". "Hanako SUZUKI" belongs to "Hanako SUZUKI personal". "Jiro TANAKA" belongs to "Jiro TANAKA personal".

The tables in Figs. 14 and 15 are also used for the purpose of determining, from the belonging groups of the respective data, a relationship between each data and the terminal accessing it, and thus for determining the use terminal attributes (304 in Fig. 13) indicating the terminals owning the respective data entries.

Fig. 16 illustrates formats of the server data update notification, which is provided for updating the server data stored in server data storing portion 3 of data server device 1.

The data of the these formats is used in the processing of providing the update notification to data server device 1 at SC04 in Fig. 11 already described.

These formats include a terminal ID (IDentification) D01 for identifying the client device of the sender, a data size D02, data contents D03, an application D04 utilizing the data, a belonging group D05 of the data, a degree D06 of importance of the data, day and time D07 of last update of the data in data server device 1 (i.e., the date and time of update in data server device 10 equal to the date and time of the last operation of taking the data from data server device 1 into client device 10, or the date and time of the last registration of the data from client device 10 into data server device 1), date and time D08 of last update of the data in client device 10, and a registration type D09 indicating that new registration of the data was performed in server data storing portion 3 of data server device 1, or that updating was effected on the data stored in server data storing portion 3.

The formats may appropriately contain information other than the information described above. Conversely, all the fields described above are not essential.

Substantially similar data formats can be used when providing the data update notification from data server device 1 to client device 10.

Operations for various services in this system will now be described.

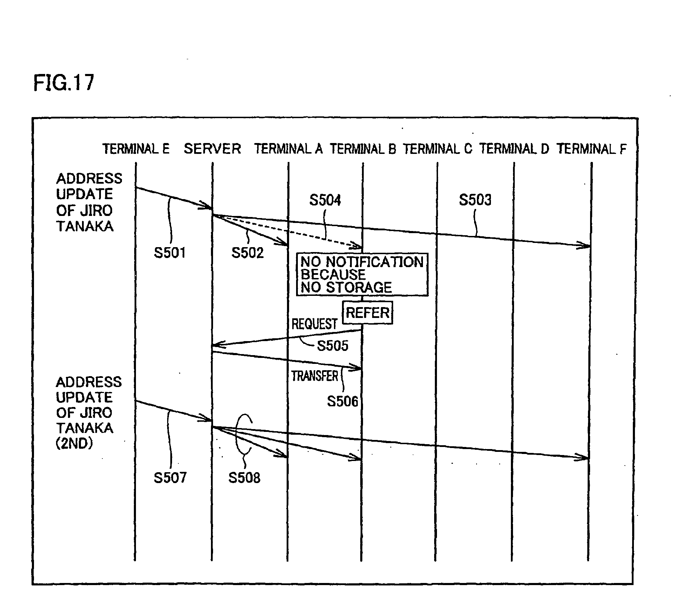

Referring to Fig. 17, description will now be given on the case, where the data entry of "Jiro TANAKA" in the address book data is updated.

It is assumed that "Jiro TANAKA" updates his address data in terminal E, i.e., client device 10 of the cellular phone used by "Jiro TANAKA" for the personal use. First, in accordance with contents of an operation by "Jiro TANAKA", terminal E changes the entry, which contains the address data of "Jiro TANAKA". This entry is stored in client data storing portion 12 of client device 10, and is a copy of the server data stored in server data storing portion 3 of data server device 1. Then, control portion 15 of terminal E is connected to data server device 1 via communication portion 11 and network 5, and requests the update of the server data of the address of "Jiro TANAKA" stored in server data storing portion 3 of data server device 1 (S501).

Client storage data managing portion 2 of data server device 1, which receives the update request for the address data of "Jiro TANAKA" from terminal E, updates the entry of the address data of "Jiro TANAKA" in the server data stored in server data storing portion 3. Also, according to the table illustrated in Fig. 13, it is determined that four terminals A, B, E and F use the data entry of the address book of "Jiro TANAKA", and three terminals A, E and F have stored the data entry. Thereby, it is determined that two terminals A and F are to be subjected to the data updating because the update request was issued from terminal E.

Therefore, client storage data managing portion 2 of data server device 1 operates communication portion 4 to perform the communication over network 5 to notify that the update is to be effected on the data entry of the address book of "Jiro TANAKA", which is stored in client data storing portions 12 of terminals A and F (S502 and S503). Thereby, it becomes possible to refer to the updated address book data of "Jiro TANAKA" in terminals A and F. Although terminal B uses the above data entry, the data entry is not currently stored so that a procedure for data update is not performed.

Thereafter, the address book application boots up in terminal B. When the access to the address book of "Jiro TANAKA" is attempted, control portion 15 of terminal B operates communication portion 11 to request the server data stored in server data storing portion 3 of data server device 1 over network 5 (S505) because the address book data of "Jiro TANAKA" is not present in client data storing portion 12. Data server device 1 receiving the request for the server data of the address book of "Jiro TANAKA" reads out the address book data of "Jiro TANAKA", which is stored in server data storing portion 3 and is already updated, and sends the address book data to terminal B from communication portion 4 over network 5 (S506).

When "Jiro TANAKA" effects second updating on the address data by terminal E, processing similar to the above is performed to request the updating of the server data in data server device 1 (S507). Data server device 1 receiving the data update request determines that four terminals A, B, E and F have stored the data entry in question, and that three terminals A, B and F are to be subjected to the data updating, because the update request was issued by terminal E. Therefore, client storage data managing portion 2 of data server device 1 operates communication portion 4 to perform communication over network 5, and notifies that the data entry of the address book data of "Jiro TANAKA" stored in client data storing portions 12 of terminals A, B and F is to be updated (S508).

Through the foregoing procedures, the updating of the address book data of "Jiro TANAKA" in terminal B is reflected in server data storing portion 3 of data server device 1. Thereafter, any one of the other terminals, which allow reference to the address book data of "Jiro TANAKA", can share the correctly updated data.

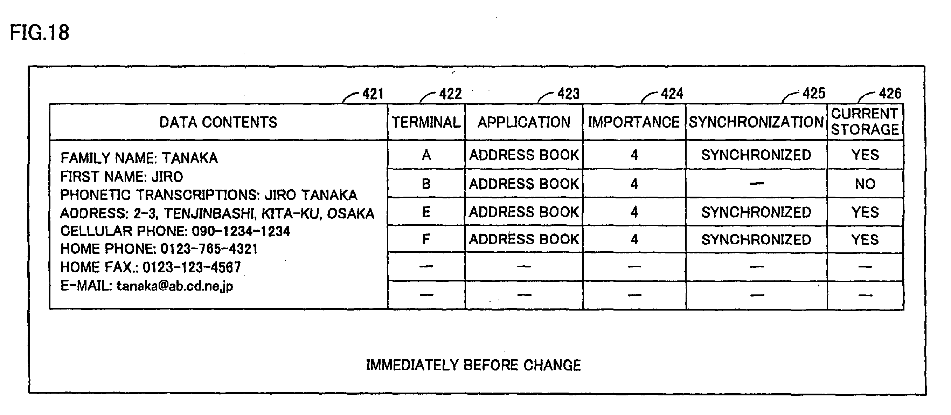

Referring to Figs. 18 to 23, description will now be given on the changes of data in data server device 1 during the data update processing of the system illustrated in Fig. 17.

Fig. 18 illustrates, by way of example, data server device 1 before starting the processing of changing the address book data of "Jiro TANAKA" in Fig. 17. At this point in time, three terminals A, B and F have stored the address data, which was provided before the first update processing for "Jiro TANAKA" was performed in data server device 1, and the data of "Jiro TANAKA" is already deleted from the storage device of terminal B because it had not been used for a long time.

As illustrated in Fig. 18, the server data includes data contents 421, and also includes, for each terminal 422, an application attribute 423 indicating an application to be used for handling the data in the terminal, an importance attribute 424 representing a degree of importance of the data in this terminal, a synchronization attribute 425 representing whether the data stored in client data storing portion 12 of the terminal is already synchronized with corresponding server data 421 or not, and a current-storage attribute 426 indicating whether the terminal has stored the data in question or not.

In Fig. 18, as described above, terminals A, E and F are in such a state that current-storage attributes 426 are "Yes", and synchronization attributes 425 are "Synchronized". Terminal B not storing the data is in such a state that current-storage attribute 426 is "No", and synchronization attribute 425 is "not synchronized", i.e., "-" because it has not stored the data.

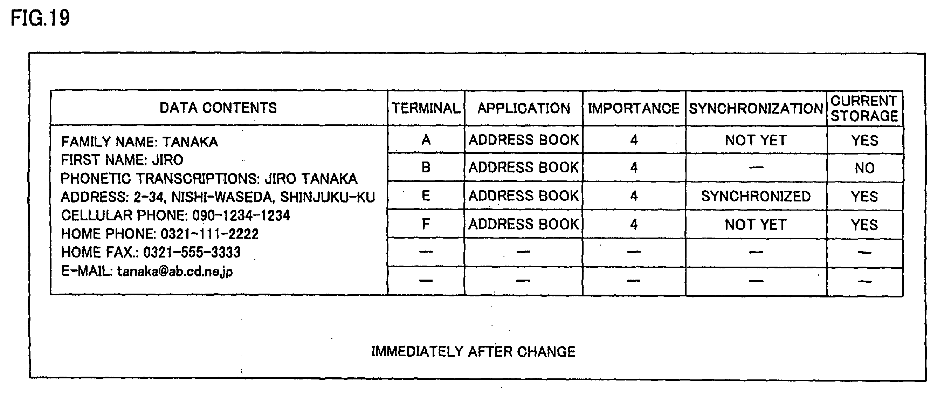

When "Jiro TANAKA" changes the address book data in terminal E, terminal E provides the update notification to data server device 1 (S501), and the server data of the address book data of "Jiro TANAKA" stored in server data storing portion 3 of data server device 1 is updated. Fig. 19 illustrates a state of the server data immediately after this updating.

At this point in time, since the address book data of "Jiro TANAKA" stored in terminal E matches with that stored in server data storing portion 3 of data server device 1, the current-storage attribute relating to terminal E is "Yes", and the synchronization attribute is "synchronized". Other terminals A and F bearing the current-storage attributes of "Yes" bear the synchronization attributes of "Not Yet" so that these terminals attain the states illustrated in Fig. 19.

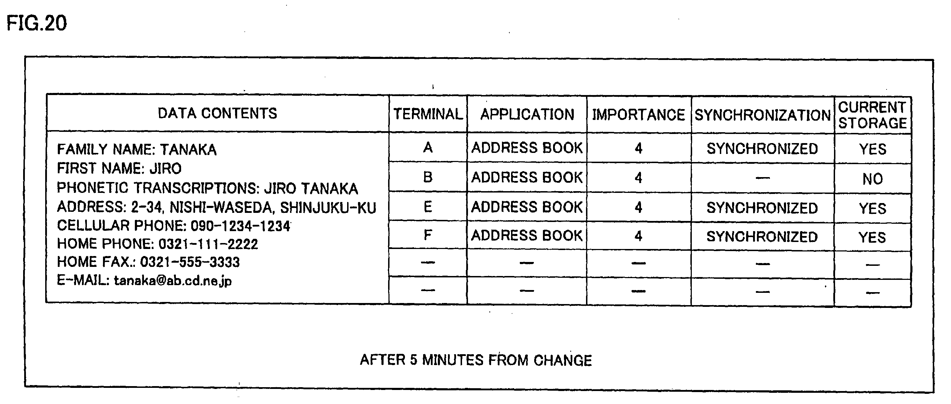

Fig. 20 illustrates, by way of example, a state of the server data of data server device 1, which is attained when five minutes elapsed after the point in time illustrated in time, and thus after the first processing of changing the address of "Jiro TANAKA" is reflected in server data storing portion 3 of data server device 1.

In the state illustrated in Fig. 20, the data update notifying processing (S503 and S504) is already effected on terminals A and F, of which synchronization attributes were "Not Yet" in the state of Fig. 19, and therefore these synchronization attributes are changed into "synchronized" as illustrated in Fig. 20.

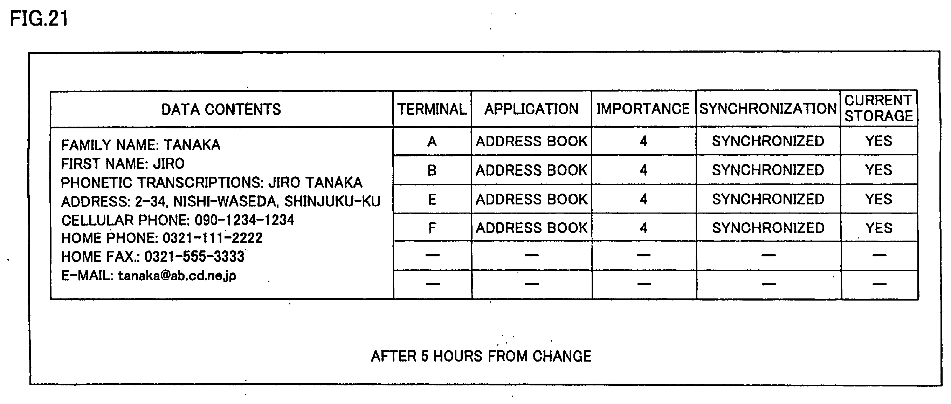

Fig. 21 illustrates, by way of example, the state of the server data of data server device 1, which is attained when five hours elapsed after the first address change processing for "Jiro TANAKA" was reflected in server data storing portion 3 of data server device 1.

The address book application boots up in terminal B after the state in Fig. 20 is attained, and the address book data of "Jiro TANAKA" is accessed. In the state illustrated in Fig. 21, therefore, terminal B has already issued a request for data to data server device 1 (S505), and data server device 1 has transferred the address book data of "Jiro TANAKA" to terminal B in accordance with the request (S506).

In this point in time, the server data of the data server device attains the state illustrated in Fig. 21, in which the current-storage attribute of terminal B, which was "No" in the state illustrated in Fig. 20, changes into "Yes", and the synchronization attribute changes to "synchronized".

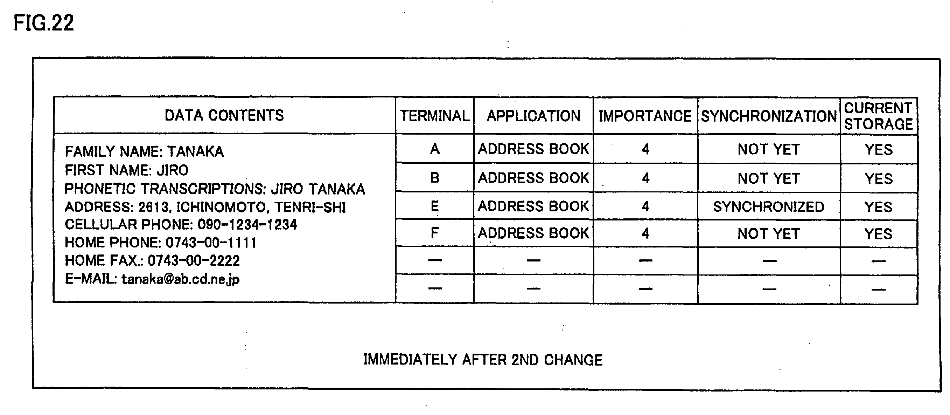

Then, "Jiro TANAKA" performs the second processing of changing the address data in terminal E so that terminal E provides an update notification to data server device 1 (S507), and the address book data of "Jiro TANAKA" stored in server device storing portion 3 of data server device 1 is updated for a second time. Fig. 22 illustrates a state of the server data immediately after this second updating.

In this state, the address book data of "Jiro TANAKA" in terminal E matches with that stored in server data storing portion 3 of data server device 1, similarly to the state in Fig. 19. Therefore, the current-storage attribute relating to terminal E is "Yes", and the synchronization attribute is "synchronized". Other terminals A, B and E, of which current-storage attributes are "Yes", have the synchronization attributes of "Not Yet", and therefore attain the state illustrated in Fig. 22.

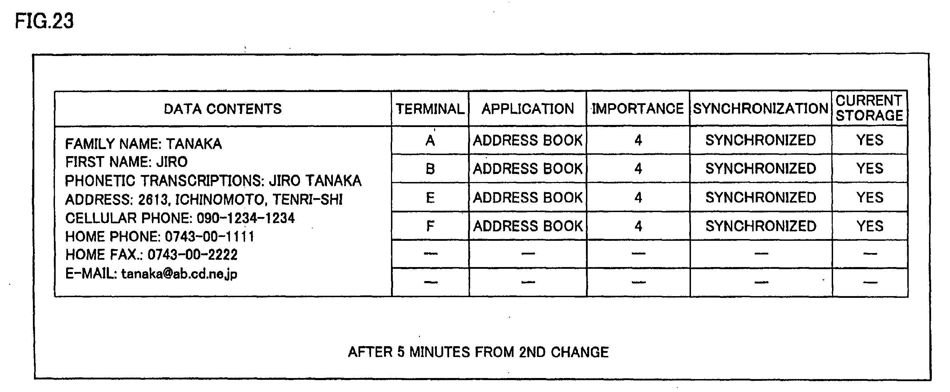

Fig. 23 illustrates, by way of example, a state of the server data of data server device 1 attained when five minutes elapsed from the state in Fig. 22, in which the second address-change processing for "Jiro TANAKA" illustrated in Fig. 23 was reflected in server data storing portion 3 of data server device 1.

At this point in time, data update notifying processing (S508) is already completed in terminals A, B and F, of which synchronization attribute was "Not Yet" in the state illustrated in Fig. 22. Therefore, these synchronization attributes are changed into "synchronized", and the state illustrated in Fig. 23 is attained.

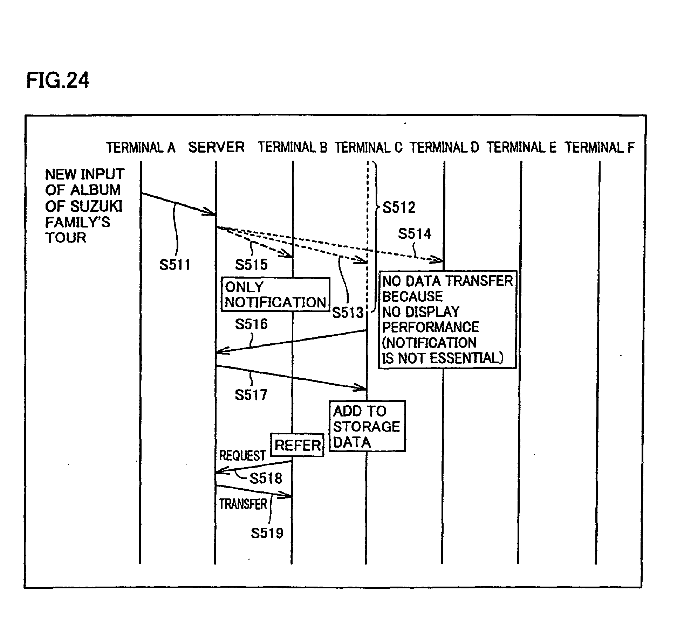

Fig. 24 illustrates a flow of processing in the case where new input into an album is performed in this system.

In the following description, terminal A, which is a cellular phone owned by "Taro SUZUKI" for a personal use, is used, and photographs of SUZUKI families during a family tour are newly entered as an album in SUZUKI family data 203 by terminal A.

When the SUZUKI family tour album, which bears attributes that the belonging group is "SUZUKI family" and the application is "album", is newly entered in terminal A, control portion 15 of terminal A stores the entered album data in client data storing portion 12. Also, control portion 15 connect communication portion 11 to data server device 1 over network 5, and newly registers the entered new album data, as server data, in server data storing portion 3 of data server device 1 (S511).

The album data provided to terminal A may be obtained by a digital camera, and may be transferred to terminal A via infrared communication or short-range wireless communication. Alternatively, terminal A may incorporate a function of a digital camera, and the album data may be obtained by this camera function.

Client storage data managing portion 2 of data server device 1 receiving the registration of the new album data determines whether there is a terminal, to which the new album data is to be transferred, or not.

From the attribute of the album data, it is determined that the belonging group is "SUZUKI family", and then, it is determined from the table of the group data illustrated in Fig. 15 that "Taro SUZUKI" and "Hanako SUZUKI" belong to "SUZUKI family". From the table of the attributes of the respective terminals illustrated in Fig. 14, it is determined that "Taro SUZUKI" and "Hanako SUZUKI" own four terminals A, B, C and D.

It is already recognized that terminal A produced the new album data. Therefore, it is determined that transfer of new album data to terminal A is not necessary.

It is determined that terminal C is a desktop personal computer, and therefore can use plenty of storage region owing to fast wired connection charged at a flat rate. Therefore, transfer thereto was attempted. However, terminal C was off when the transfer was attempted. Also, the communication path was interrupted due to a failure (S512). Therefore, updating of the client data in terminal C is abandoned (S513).

From the table in Fig. 14, it is already determined that terminal D has only a text display performance. Therefore, it is determined that transfer of the new album data formed of photograph data is not required (S514). However, terminal D may be notified that the new album data is registered on data server device 1.

From Fig. 14, it is determined that terminal B is a PDA, and uses a slow wireless line charged at a usage-base rate. Thereby, the new album data itself is not transferred, and terminal B is notified only that the new album data is added to the server data in the server data storing portion of data server device 1 (S515).

When "Hanako SUZUKI" powers on terminal C, or when the network failure is resolved to open the communication path, control portion 15 of terminal C sends an inquiry from communication portion 11 to data server device 1 over network 5 for determining whether the client data stored in client data storing portion 12 of terminal device C requires the updating or not (S516). In response to the inquiry, data server device 1 transfers the new album data (S517). Control portion 15 of terminal C receiving the transferred new album data stores the new album data in client data storing portion 12.

In this example, inquiry about presence of the data to be updated is made after the power-on of terminal C. However, such a manner may be employed that terminal C does not make an inquiry, and data server device 1 periodically attempts the update processing. In this case, if the updated data has a high degree of importance, such processing can be effective that the update processing is periodically attempted at gradually reducing intervals.

Since terminal B uses a wireless line charged at a usage-base rate, this example is configured to provide only the notification about addition of new data. If the data is, e.g., album data having a high degree of importance, it is effective to transfer the image data, or to change the update processing depending on the degree of importance.

When "Taro SUZUKI" requests the reference to the album data through terminal B (S518), client storage data managing portion 2 of data server device 1 transfers the new album data to terminal device B, which is one of client devices 10, from communication portion 4 over network 5 (S519).

Through the above procedures, the group data added to one client device 10 can be automatically distributed to client data storing portions 12 of the other client devices 10, which will share the data.

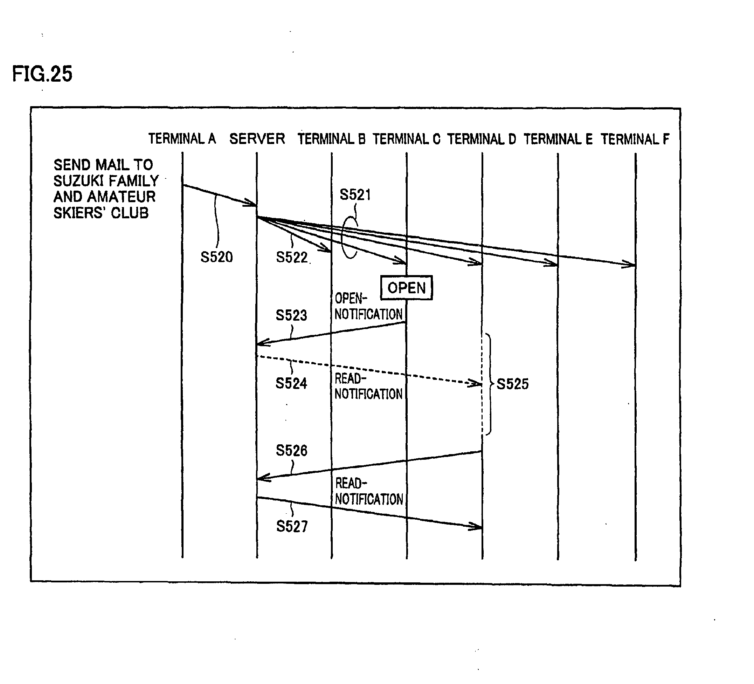

Referring to Fig. 25, description will now be given on a flow of processing for sending a mail in this system. In the following description, a new mail is sent from terminal A, which is a cellular phone owned by "Taro SUZUKI" for the personal use, to "Hanako SUZUKI" and "amateur skiers' group".

In the operation of sending the new mail from terminal A to "SUZUKI Family" and "amateur skiers' group", control portion 15 of terminal A first stores the new mail, as mail data, in its client data storing portion 12, and operates communication portion 11 to connect to data server device 1 over network 5. Thereby, control portion 15 of terminal A newly registers the entered new mail data, as server data, in server data storing portion 3 of data server device 1 (S520).

Client storage data managing portion 2 of data server device 1 storing the new mail data thus registered determines a destination terminal in accordance with a destination field of the registered mail data.

In this case, the destination field includes "Hanako SUZUKI" and "amateur skiers' group" so that client storage data managing portion 2 of data server device 1 sends the new mail data to client data storing portions 12 of all the terminals owned by "Hanako SUZUKI" and the members of "amateur skiers' group". From the tables in Figs. 14 and 15, six terminals A, B, C, D, E and F are selected. Since terminal A is the sender of the new mail, client storage data managing portion 2 of data server device 1 selects five client devices 10 of terminals B, C, D, E and F as the destinations of the new mail. Client storage data managing portion 2 connects communication portion 4 to each of terminals B, C, D, E and F over network 5, and transfers the new mail data to be registered in client data storing portion 12 of each terminal (S521).

Control portion 15 of each client device 10, which registered the new mail data in client data storing portion 12, displays arrival of the new mail via a user interface for mail because the application attribute of the newly registered data is "mail".

Since terminal B is owned by the same owner "Taro SUZUKI", the new mail data is transferred thereto, and is registered in client data storing portion 12 as a sent mail (S522).

In terminal C owned by "Hanako SUZUKI", when the new mail is opened, control portion 15 of terminal C recognizes the processing, in which the new mail is opened, according to detection of the read-access to the new mail data by client data storing portion 12, or according to the notification from the mail application. Thereby, control portion 15 of terminal C notifies data server device 1 about the processing of opening the new mail data (S523). When client storage data managing portion 2 of data server device 1 receives the notification about processing of opening of the new mail data in terminal C, it is determined from the table in Fig. 14 that the same user also owns terminal D. Terminals C and D are used by the same user "Hanako SUZUKI". In this embodiment, therefore, client storage data managing portion 2 of data server device 1 attempts to provide a notification about the already-read state to terminal D from communication portion 4 over network 5 (S525). It is assumed that terminal D was in a state incapable of communication because it is, e.g., inside an office building (S525).

When the communication by terminal D becomes possible, e.g., because of movement to an outside, control portion 15 of terminal D connects communication portion 11 to data server device 1 over network 5, and checks whether updating of the server data has been performed or not (S526). In accordance with the checking of the update data by terminal D, data server device 1 provides the notification about already-read state of the new mail to terminal D (S527).

In the above example, terminal D sends an inquiry to data server device 1 to determine whether the server data has been updated or not, when the communication becomes possible. Conversely, terminal D may be configured not to send an inquiry, and data server device 1 may be configured to attempt periodically the notification about the data update.

Terminal D receiving the already-read notification from data server device 1 changes the attribute of the new mail to "read" (i.e., already-read).

Through the processing described above, the mail application in each client device 10 stores the mail data together with predetermined attributes added to client data storing portion 12 of client device 10 so that the mail system can be achieved.

The above can also avoid such a problem that the mail, which was already read by terminal C, is handled as a new mail by terminal D, and "Hanako SUZUKI" unwillingly reads it twice as a new mail.

The attributes of "read" and "unread" of the mail may be configured such that the attributes are set for each group of a plurality of users or terminals in connection with the mail entries of the server data in server data storing portion 3 of data server device 1, and may be reflected in each terminals by each communication. In each terminal, the mail entry in the server data may be copied for managing the attributes of each mail entry.

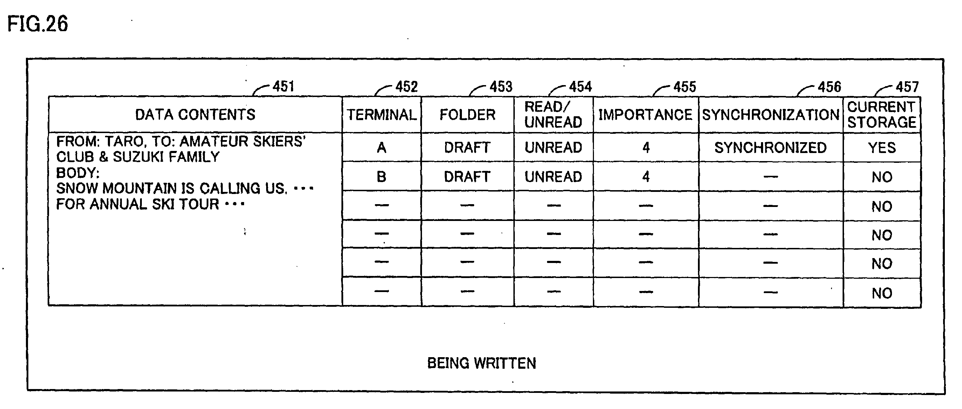

Referring to Figs. 26 to 31, description will now be given on changes in server data, which corresponds to the mail data and is stored in server data storing portion 3 of data server device 1, and particularly on the changes with time during this mail processing.

Fig. 26 illustrates a state during preparation of a new mail by terminal A. A mail application keeps a mail 451, which is being prepared, in a draft folder within server data storing portion 3. Therefore, a folder attribute 453 of "draft" is assigned thereto. In connection with an read/unread attribute 454, an attribute of "unread" is assigned to the mail data, which is being prepared. The user sets an importance degree 455 of this mail to a value of "4". These attributes are stored for each terminal 452 together with a synchronization attribute 456 and a storage information 457 indicating whether the mail data is currently stored in each terminal or not.

The mail data, which is being prepared, is shared also by terminal B of the same user "Taro SUZUKI". Therefore, terminal B manages similar information. In this example, synchronization with client data storing portion 12 of terminal B is not performed during preparation of the mail data. Therefore, the synchronization information is already synchronized in connection with terminal A, but is not yet synchronized in connection with terminal B. Naturally, when edition is continued by terminal B subsequently to the above state, client data storing portion 12 of terminal B stores the mail data, which is being prepared.

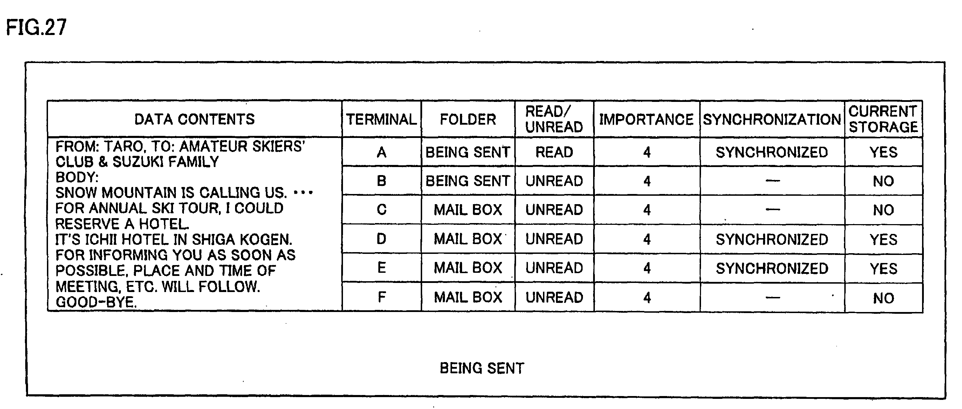

Fig. 27 illustrates a state, in which the new mail is already written, and is being sent. At this point in time, the writer of the mail has already read the mail. Therefore, the read/unread attribute is "read" in terminal A owned by the writer "Taro SUZUKI". In other terminals C, D, E and F, the read/unread attribute is "unread" because the mail is not open. At this point in time, this mail is already synchronized in the client data storing portions 12 of terminals D and E, and the synchronization processing is not yet completed in client data storing portions 12 of terminals C and F. In connection with terminal A, the folder attribute is "being sent". It is assumed that terminal B does not perform the synchronization of this data, and therefore is assigned the attribute of "unread".

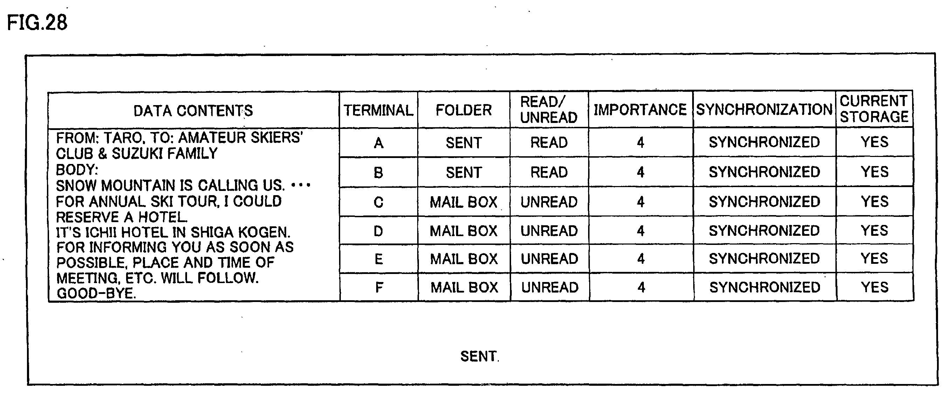

Fig. 28 illustrates a state attained when synchronization of the new mail with respect to all the destination terminals is completed. At this point in time, terminals A and B of the mail sender "Taro SUZUKI" are assigned the folder attribute of "sent", and are also assigned the attribute of "read" because the mail is written by himself. In this example, users of the other terminals have not opened the mail at this point in time. Therefore, these terminals are assigned the attribute of "unread".

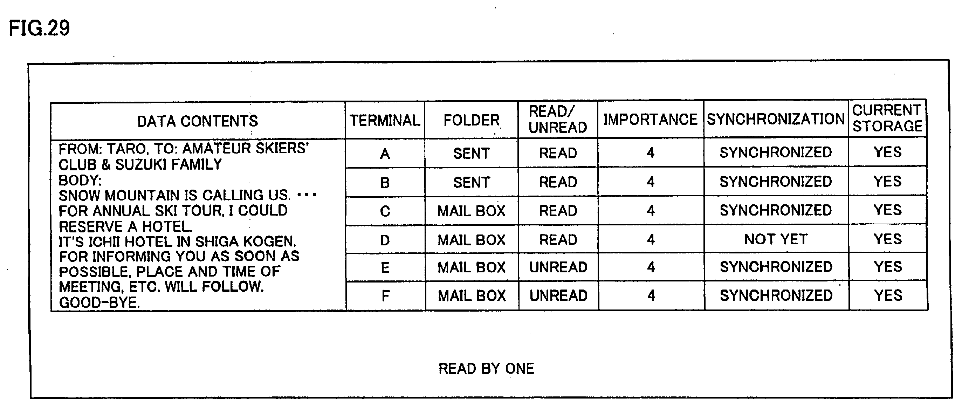

Fig. 29 illustrates a state, which is attained immediately after terminal C opened the mail and provided the data update notification relating to this mail.

At this point in time, the read/unread attribute of terminal C is set to "read" in response to the update notification provided from terminal D. At the same time, the read/unread attribute of terminal D is set to "read". The synchronization of read/unread attribute with respect to terminal D is not yet completed at this point in time.

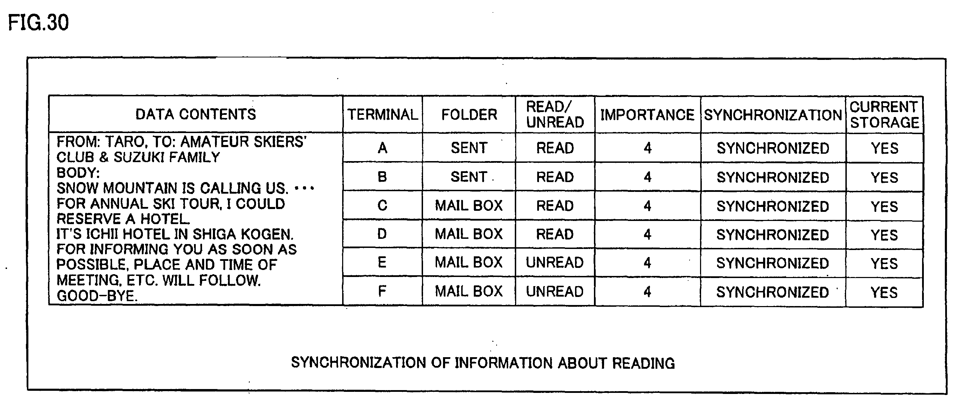

Fig. 30 illustrates a state after a certain time from the time in Fig. 29. At this point in time, The synchronization of read/unread attribute with respect to terminal D is completed.

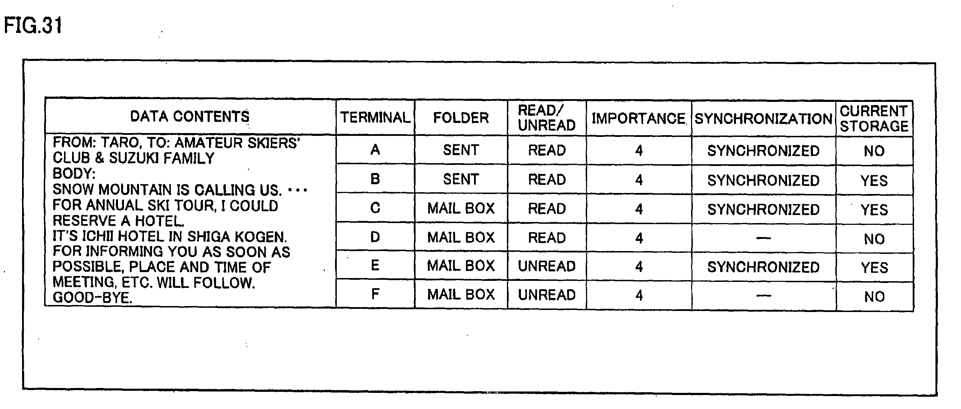

Fig. 31 illustrates a state after few days from the time in Fig. 30. In this state, the information of the mail had not been used in terminals D and F for a certain time, and therefore is already deleted from client data storing portion 12 for downloading another data from data server device 1.

Owing to the above processing, the mail application of each client device 10, which prepared the mail data, can send a mail to its client data storing portion 12.

In the above processing, the mail can be sent only to the other client devices. However, if the address of the conventional Internet mail is designated as a mail destination, data server device 1 uses the destination data in To-field of the mail data, and sends the mail data in accordance with the SMTP (Simple Mail Transfer Protocol) similarly to the conventional Internet mail. Thereby, it is possible to maintain compatibility with the conventional Internet mail.

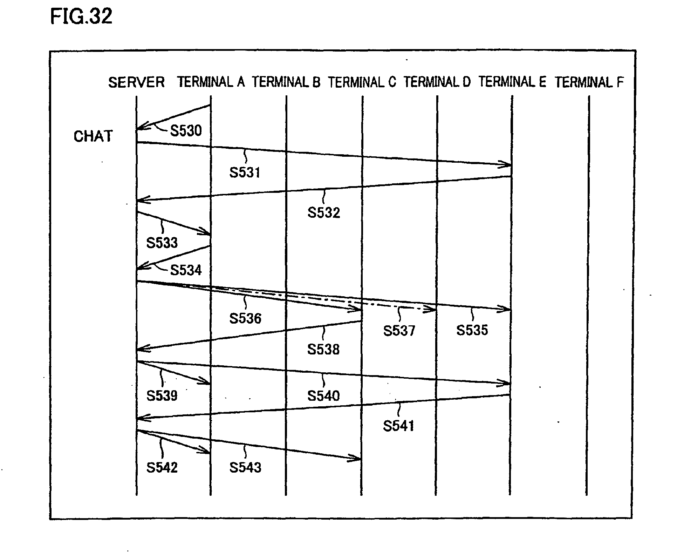

Referring to Fig. 32, description will now be given on a flow of processing for having a chat in this system. It is now assumed that "Taro SUZUKI" starts a chat via terminal A with "Jiro TANAKA", and thereafter allows "Hanako SUZUKI" to join the chat.

Using a chat application in terminal A, "Taro SUZUKI" starts the chat with "Jiro TANAKA". The chat application is executed in control portion 15 of terminal A. When input portion 14 detects an operation requesting start of the chat with "Jiro TANAKA", the application prepares and saves a file of contents of the chat as the chat data in client data storing portion 12. In this state, the chat data relates to the chat from "Taro SUZUKI" to "Jiro TANAKA" so that two persons "Jiro TANAKA" and "Taro SUZUKI" belong to the belonging group of the data.

Since the application attribute of the data, which is newly prepared in client data storing portion 12, is the chat, control portion 15 of terminal device C immediately sends the chat data from communication portion 11 over network 5 to data server device 1 (S530).

The client storage data managing portion 2 of data server device 1 receives and stores the chat data in server data storing portion 3. In this data, the application attribute is "chat", the persons belonging to the belonging group are "Taro SUZUKI" and "Jiro TANAKA", and the data is received from "Taro SUZUKI". Therefore, it is immediately attempted to reflect the chat data in the terminal of the person other than "Taro SUZUKI", i.e., in the terminal of "Jiro TANAKA". As can be seen from the table in Fig. 14, "Jiro TANAKA" owns two terminals E and F, but terminal F is used for the business use. Therefore, the chat data of "Taro SUZUKI" in the same amateur circle is provided only to terminal E, i.e., the cellular phone for the personal use (S531).

Control portion 15 of terminal E receiving the chat data from data server device 1 stores the chat data in client data storing portion 12. Since the application attribute of this data is "chat", the chat program boots up, or a notification about reception of the new chat data is provided to the chat application, which is already running as a process. The chat application receiving the notification displays a window for the chat on output portion 13, or switches the screen image itself, and thereby the application outputs the received chat data. In this case, the notification to the user may be performed by sounds.

Then, "Jiro TANAKA" notices the chat message from "Taro SUZUKI", and writes a message in response to the message displayed on output portion 13 of terminal E. Thereby, the chat application updates the chat data in client data storing portion 12 of terminal E. When the chat data of client data storing portion 12 is updated, control portion 15 of terminal E immediately provides the notification about the update of the data from communication portion 11 to data server device 1 over network 5 (S532) because the application attribute is "chat".

Client storage data managing portion 2 of data server device 1 receiving the notification updates the chat data of server data storing portion 3 based on the received contents of the chat data. As described above, the application attribute of the data is "chat", the persons belonging to the belonging group are "Taro SUZUKI" and "Jiro TANAKA", and the chat data is received from "Jiro TANAKA". Therefore, it is immediately attempted to reflect the chat data in the terminal of the person other than "Jiro TANAKA", i.e., in the terminal of "Taro SUZUKI". As can be seen from the table in Fig. 14, "Taro SUZUKI" owns two terminals A and B, but the first chat data prepared by "Taro SUZUKI" was provided from terminal A so that the update notification is provided to terminal A (S533).

Thereafter, control portion 15 in each terminal executes similar processing.

In response to the message in S533, it is assumed that "Taro SUZUKI" operates input portion 14 of terminal A to add "Hanako SUZUKI" as the chat member. Thereby, control portion 15 of terminal A changes the belonging group attribute of this chat data to three persons "Taro SUZUKI", "Hanako SUZUKI" and "Jiro TANAKA", and notifies data server device 1 about it (S534).

In the chat data provided from terminal A, the belonging group attribute of the chat data is changed to add "Hanako SUZUKI" to the belonging group. Therefore, client storage data managing portion 2 of data server device 1 provides the chat data terminal E owned by "Jiro TANAKA" (S535), and also provides a notification about the updating of the chat data to the recorded terminals of "Hanako SUZUKI", i.e., terminals C and D (S536 and S537). Each of terminals C and D has not stored the chat data in client data storing portion 12, and therefore stores it as new data so that terminals C and D perform the processing similar to that already described.

When "Hanako SUZUKI" using terminal C responds to the chat data, control portion 15 of terminal C provides a notification about chat data updating from communication portion 11 over network 5 to data server device 1 (S538). Since client storage data managing portion 2 of data server device 1 has received this update notification from terminal C, the chat data for "Hanako SUZUKI" in this chat is provided to terminal C, and the chat data received by terminal C is provided to terminals A and E, i.e., the terminals of the members other than "Hanako SUZUKI" (S539 and S540).

Accordingly, when the update notification for this chat data is provided by terminal E (S541), client storage data managing portion 2 of data server device 1 provides the update notification to terminals A and C (S542 and S543).

Through the foregoing processing, the chat application of client device 10 prepares and updates the chat data for each client data storing portion 12 so that the chat system is achieved as a whole.

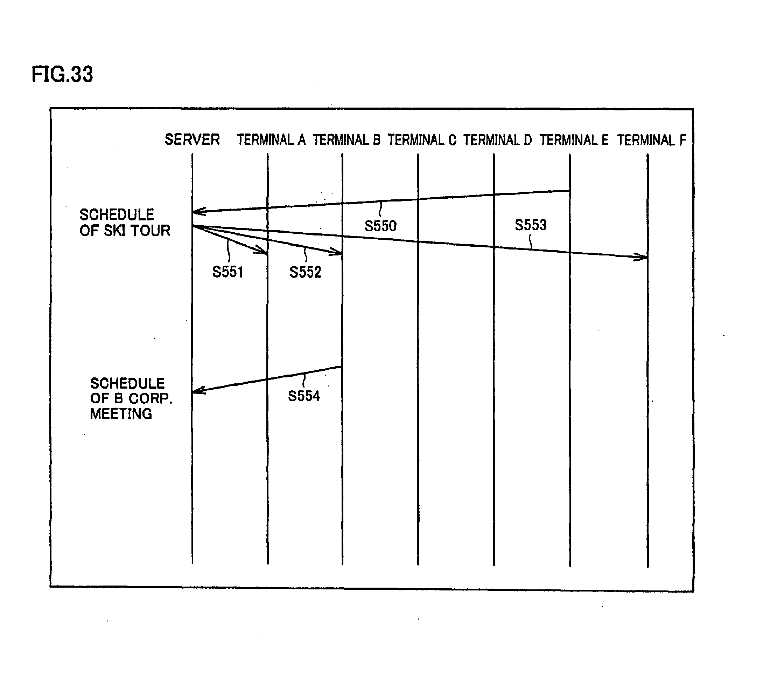

Referring to Fig. 33, description will now be given on processing, which is performed when a plurality of users entered schedule data to be shared, or when a plurality of users entered schedules unique to the respective terminals.

Description will now be given on the processing in such a case that terminal E owned by "Jiro TANAKA" is operated to register the schedule data bearing the belonging group attribute of "amateur skiers' group".

"Jiro TANAKA" operates input portion 14 of terminal E to register the schedule of a ski tour of "amateur skiers' group" together with the belonging group attribute of "amateur skiers' group". Thereby, control portion 15 of terminal E registers data of this the schedule in client data storing portion 12, and connects communication portion 11 to data server device 1 over network 5 to register the schedule data (S550). Assignment of the belonging group attribute in this processing may be performed by editing the attribute of data, or may be performed in such a manner that the directory management is performed, and the belonging group attribute is assigned to the predetermined directory so that all the files in the predetermined directory are assigned the same belonging group attribute.

Client storage data managing portion 2 of data server device 1, which received registered schedule data bearing the belonging group attribute of "amateur skiers' group" from terminal E, stores the schedule data in server data storing portion 3, and operates communication portion 4 to register the schedule data in three client devices 10 of terminals A, B and F (S551, S552 and S553). Control portion 15 of each client device 10, which received the schedule data from data server device 1, registers the schedule data in client data storing portion 12.

Then, description will be given on the processing in such a case that "Taro SUZUKI" uses terminal B to enter business data, i.e., a schedule for meeting with "B" corporation.

When "Taro SUZUKI" operates input portion 14 of terminal B to enter the schedule for meeting with "B" corporation together the belonging group attribute of "terminal B" for registration, control portion 15 of terminal B registers the schedule data in client data storing portion 12. Also, control portion 15 connects communication portion 11 to data server device 1 over network 5 to register the schedule data (S554).

Since the belonging group attribute in this processing is only terminal B, data server device 1 determines that the synchronization is to be effected only on terminal B, and does not perform the synchronizing processing on terminal A, which is client device 10 owned by the same user. Thereby, it is possible to reduce such a possibility that business data or the like to be handled under confidentiality leaks due to reflection in the terminal for the personal use.

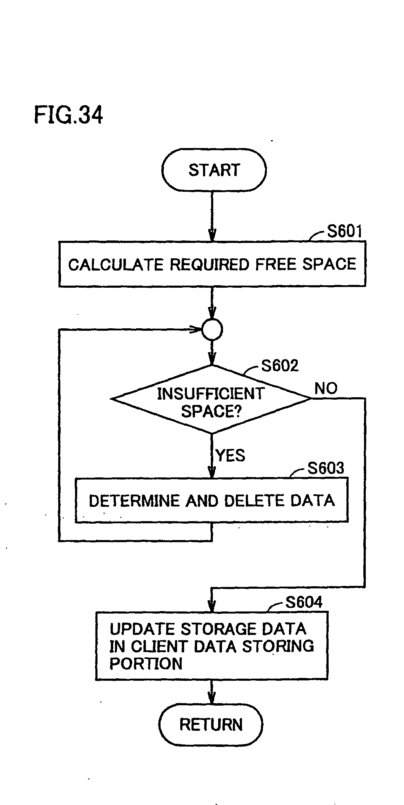

Referring to Fig. 34, reflecting processing of the update data in client device 10 will now be described.

Control portion 15 of client device 10 first calculates an amount of the free space required for reflecting the update data (S601). The free space of client data storing portion 12 of client device 10 is compared with the required space calculated in S601 (S602). When the free space is insufficient (Yes in S602), control portion 15 of client device 10 selects data to be deleted from the data stored in client data storing portion 12, and deletes it (S603). Again, the free space of client data storing portion 12 of client device 10 is compared with the required space calculated in S601 (S602). When the free space is sufficient (No in S602), control portion 15 of client device 10 updates the storage data in client data storing portion 12 (S604).

In the above processing, the processing of reflecting the update data is necessarily performed. However, the processing may be configured such that the update data is not accepted, e.g., in such cases that all the information stored in client data storing portion 12 is more important than the update data. It may be effective to inhibit temporarily the acceptance of the data update provided from the server in accordance with user's setting.

In this embodiment, the decision of the data deletion is performed as follows.

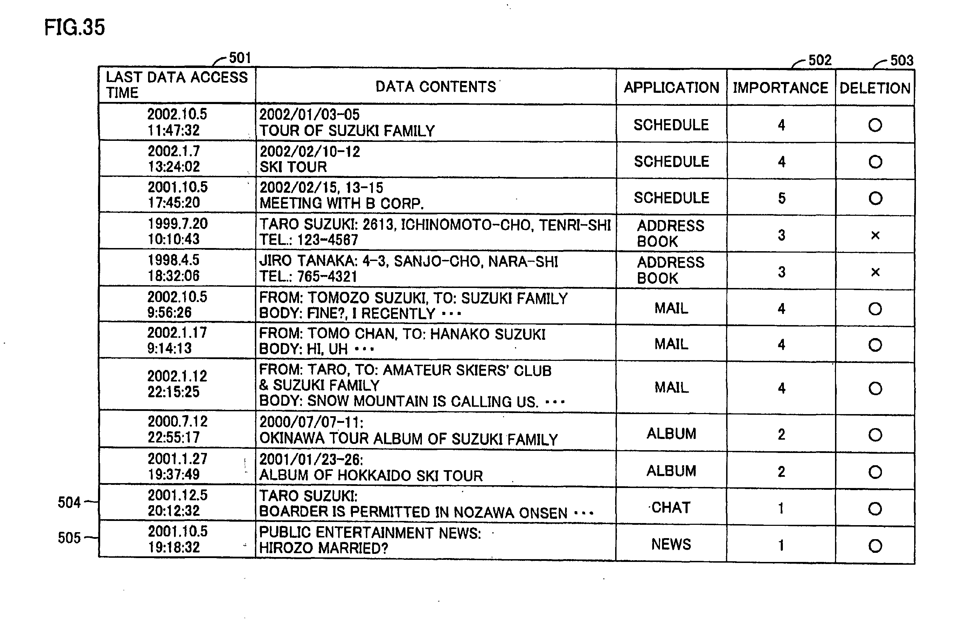

It is assumed that deletion of the data is required when the data stored in client data storing portion 12 of client device 10 has contents as illustrated in Fig. 35. In this embodiment, each data bears various attributes such as last data access time 501, importance 502, which is rated on a 1-to-5 scale by the user, or is automatically rated on a 1-to-5 scale in accordance with contents, deletion decision 503 about whether the deleting operation is allowed or not.

Last data access time 501 may be the time of the last read access to the data, or the time of the last write access. Further, these may be selectively employed depending on the type of data.

The degree of importance 502 may be the same as that assigned to the server data in data server device 1, or may be variable depending on the functions and features of the respective terminals in accordance with a predetermined algorithm. In connection with the terminal for the business use, data other than business data may be assigned a low degree of importance.

Likewise, deletion decision 503 may be variable depending on the functions and features of the respective terminals in accordance with a predetermined algorithm. For example, in the terminal of the cellular phone, the phone number data is essential, and therefore may bear the attribute inhibiting the deletion.

Based on the above data, control portion 15 first searches for the data of the least importance in the deletable data. In the example of the data illustrated in Fig. 28, two data entries of chat data 504 and new data 505 are of the least importance. Then, control portion 15 compares the last access times of these two data with each other, and decides to delete the older data, i.e., news data 505 in this example. Naturally, another manner may be employed for determining the data to be deleted. For example, data such as schedule data may be selected while determining the importance primarily based on the time. Without considering the importance, the data may be deleted based on only the time. For example, such a manner may be employed that data for the future is not deleted, but past schedules are added to a list of deletable data.

Further, each data may be formed of a header portion and a data body, and the data body of a large data volume may be deleted without deleting the header portion. Thereby, the user can browse titles or the like of the deleted data, which improves the operability.

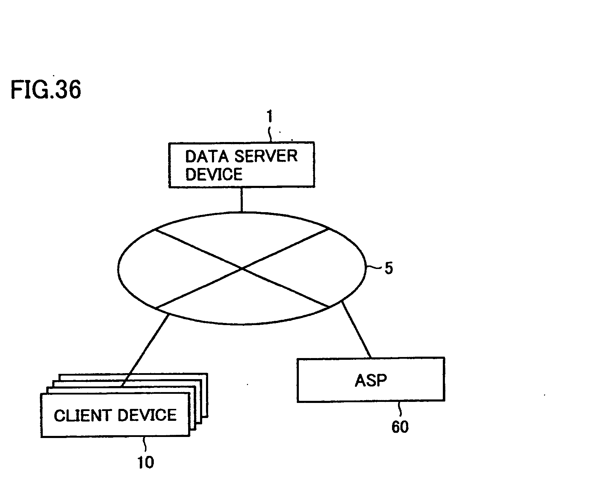

A permission for access to a part of server data in data server device 1 may be given to an external ASP or the like for allowing data processing service or data distribution service. This will now be described. Fig. 36 illustrates a hardware structure for this processing.

In Fig. 36, an ASP 60 is additionally connected to the data access system shown in Fig. 1.

Client storage data managing portion 2 of data server device 1 allows external ASP 60, which performed predetermined encryption and authentication procedures, to access a part of the server data stored in server data storing portion 3 of data server device 1 through predetermined procedures. The access is allowed, e.g., for the operation of reading data, of which belonging group attribute 303 (Fig. 13) set by the user is "anyone", and the operation in which new data is written in a spool area for receiving distribution data. If the ASP is sufficiently reliable, the ASP may be allowed to read data such as schedule data to be handled under confidentiality. Based on, e.g., the schedule data of the user, ASP 60 can provide a time table, which is probably required in the schedules, and information such as restaurants near the current locations of users, and also can issue electronic coupons to the client devices. Thereby, action information of users can be obtained in advertising activities so that the advertisement can be performed extremely efficiently. The data produced by ASP 60 is distributed to intended client devices 10 through procedures similar to those for the new data in the server data already described, and grabs users' attention in an appropriate manner.

In connection with overseas business travels, such a service may be envisaged that flights and hotels are automatically reserved based on the schedule. However, it is probably effective in this serve to cancel immediately the reservations unless the user confirm it.

In another example of application, if client device 10 is equipped with a function of a camera, service of producing electronic business cards may be offered by effecting character recognition on image data in many photographs of business cards. Also, it is possible to provide printing service with corrected color tones and improved colorfulness.

Through the above processing, client storage data managing portion 2 of data server device 1 and control portion 15 of client device 10 automatically perform the communication in accordance with the application attributes of the respective data entries. In data server device 1 and client device 10, therefore, respective applications for the mail, chat and bulletin board system requiring the communication assign predetermined attributes to the data independently of operations for communication, and the predetermined communication is performed only by accessing the respective client data storing portions 12. Therefore, each client device 10 is merely required to change the user interface such as a manner of display in accordance with features of the data. Thereby, provision of the communication protocol is not necessary, and the coding operation can be simple.

In this example, the communication processing is performed based on the application attribute, and thus the application attribute is utilized also as the communication attribute. However, the application attribute may be used only for switching the user interface, and communication attributes may be additionally employed for designating the update processing effected by client device 10 on data server device 1, and designating the update processing effected by data server device 1 on client device 10.

The external ASP may be allowed, e.g., by a VPN (Virtual Private Network) to access a part of the server data of data server device 1. Thereby, ASP business performing high-technology data processing, which cannot be performed by client device 10 without difficulty, and services requiring a huge database can be offered to each client device 10.

In the above system, data changes, which occur in the client data of client device 10, are reflected in the server data of data server device 1. In this processing, the last update date and time of the server device, which is an original of the updated client data, may be older than the last update date and time of the server data at the point in time of this reflecting processing. In this case or the like, the system may be configured to reject the server data update request issued from client device 10, and further may be configured to notify the user of client device 10 to the effect.

Conversely, in the processing of reflecting the update of the server data, which is stored in data server device 1, in the corresponding client data stored in client device 10, the last update date and time of the server data before the current updating may be older than the last update date and time of the corresponding client data. In this case or the like, the system may be configured to reject the request for the client data update issued from data server device 1, and further may be configured to notify the user, who updated the client data, to the effect.

For the above processing, a notification about the last update date and time of the data before the current updating may also be provided.

Alternatively, user's setting by a switch or the like may be configured to reject temporarily the data updating attempted by data server device 1.

In the system described above, the data to be used by the application is shared. In an environment allowing execution of a common application such as JAVA (registered trademark), an application program to be executed and a configuration file of the program may be shared by the manner already described. Thereby, it is possible and easy, e.g., to share personal setting of a tool bar of the program, bookmarks and others between the terminals of the same user, and to resume a game, which was partially played on a certain terminal, on another terminal.

In addition to the flows already described, there are procedures, in which each terminal appropriately downloads the server data of data server device 1.

For example, such a structure can be effective that data server device 1 such as a workstation is on a wide area network, personal computers serving as client devices are connected to the wide area network, and the personal computer thus connected serves as data server device 1, to which PDAs or the like serving as client devices 10 are connected over a LAN (Local Area Network).

In this embodiment, data server device 1 is configured to store the master data of all client devices 10. In this case, data server device 1 formed of a workstation or the like cannot store the master data of the data of all the personal computers, i.e., client devices 10 without difficulty if a scale of the data is large because a huge storage region is required.

Accordingly, it is not necessary that data server device 1 is formed of only one computer. A plurality of computers may be linked with each other by processing of appropriately synchronizing the data or appropriately transferring data so that single data server device 1 can be virtually formed. Alternatively, one or a plurality of foregoing client device(s) may have a function of the server device.

Data server device 1 formed of, e.g., a workstation may be configured not to store the master data of all the personal computers, i.e., client devices 10, and to store temporarily only the data to be synchronized between client devices 10. In this case, when data can be synchronized between client devices 10, the synchronized data is deleted from server data storing portion 3 of data server device 1, and processing may be performed to manage only relationships between data, which are stored in the personal computers of client devices 10 and are to be synchronized, as well as situations of the synchronization between them. The above manner is also effective.

According to the embodiment already described, data server device 1 reliably stores the server data corresponding to the data to be utilized by each client device 10. This achieves an effect that the data can be ensured even when a trouble occurs in client device 10.

Each client device 10 uses server data storing portion 3 of data server device 1 as a virtual storage. Therefore, available information can be much larger in amount than the actual storage capacity of each terminal. Also, data server device 1 manages the data stored in each client device 10 so that the information to be shared by another client device 10 is automatically synchronized with that stored in client device 10 sharing the information. This results in an effect that each user is not required to perform the same operation and/or processing twice in the terminals sharing the information.

The communication application in each client device 10 is achieved by storing the file for each service together with a communication attribute in the virtual storage. This results in an effect that coding in consideration with the communication such as a communication protocol for each communication application is not necessary.

### First Modification of First Embodiment

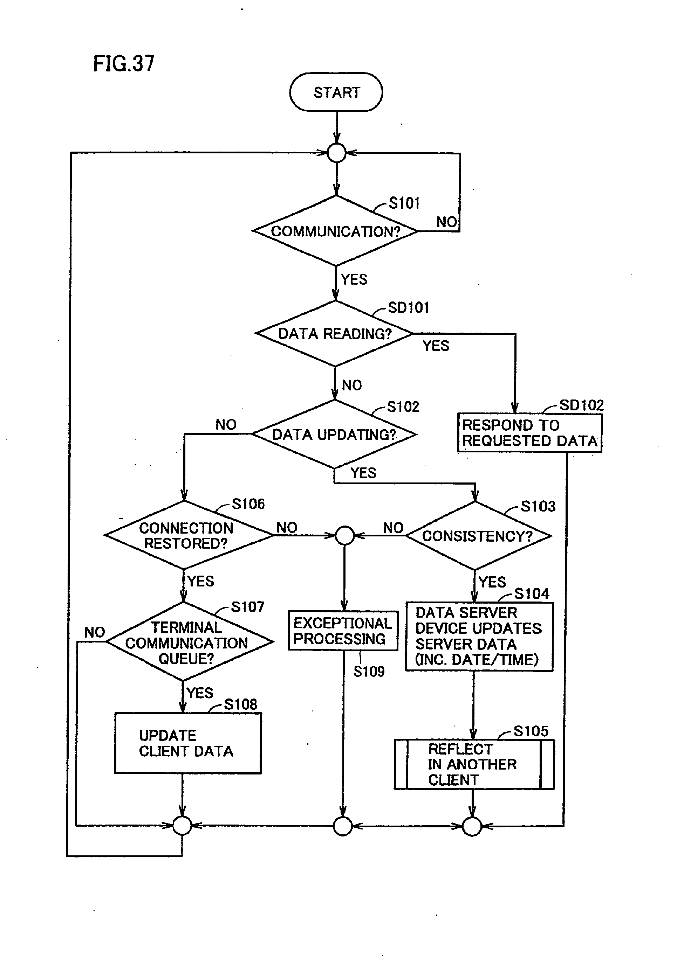

Description will now be given on a modification of the whole operation (Fig. 5) of the data server device with reference to Fig. 37. In the following description, the hardware structures, flowcharts and operations other than those in Fig. 5 are the same as those in the first embodiment, and therefore, description thereof is not repeated. In Fig. 37, the same steps as those in Fig. 5 bear the same step numbers. The step bearing the same number is performed in the same manner. Therefore, detailed description thereof is not repeated.

Referring to Fig. 37, data server device 1 waits for the communication conducted by client device 10 (S101). When the communication is conducted (Yes in S101), it is determined whether the communication data provided from client device 10 requests the reading of the server data stored in server data storing portion 3 of data server device 1 or not (SD101).

When the communication data requests the reading of the server device (Yes in SD101), client storage data managing portion 2 reads the requested data stored in server data storing portion 3 of data server device 1, and transfers the requested data to client device 10 requesting it (SD102).

When the communication data does not request the reading of the server data (No S101), it is determined whether the communication data requests the updating of the server data stored in server data storing portion 3 of data server device 1 or not (S102). Thereafter, the processing moves to S103 or S106.

In this modification, as described above, when the communication data sent from client device 10 to server device 1 is a request for reading of the server data, processing for responding to the data request is performed.

### Second Modification of First Embodiment

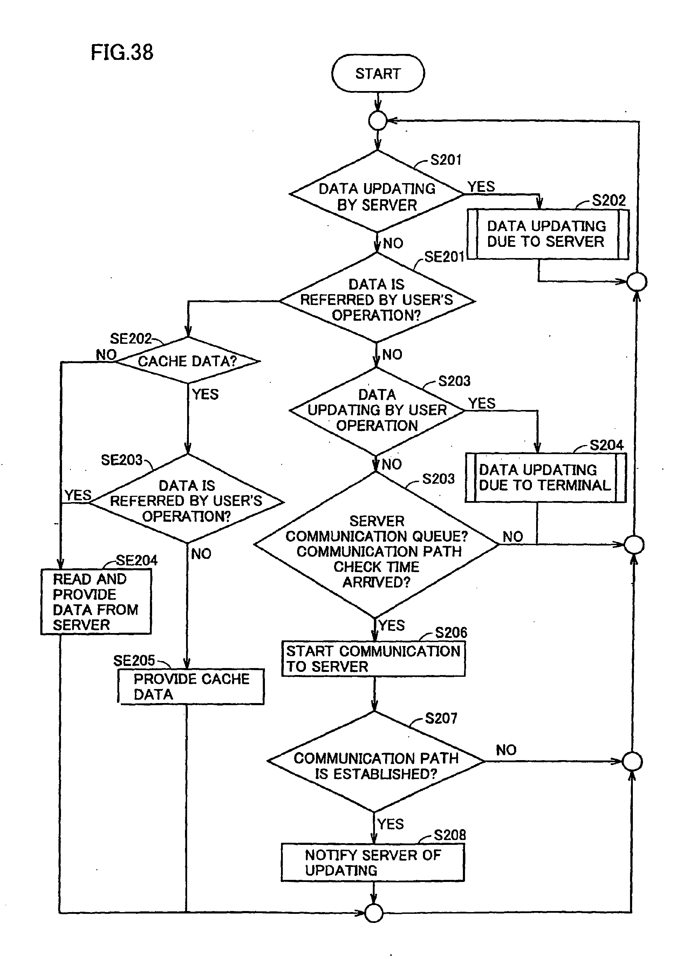

A modification of the whole operation (Fig. 8) of the client device will now be described with reference to Fig. 38. In the following description, the hardware structures, flowcharts and operations other than those in Fig. 8 are the same as those in the first embodiment, and therefore, description thereof is not repeated. In Fig. 38, the same steps as those in Fig. 8 bear the same step numbers. The step bearing the same number is performed in the same manner. Therefore, detailed description thereof is not repeated.

Referring to Fig. 38, when input portion 14 detects the operation of the user for requesting data reference (No in S201 and Yes in SE201), it is determined whether the data requested to client data storing portion 12 of client device 10 is present as cache data or not (SE202).

When the data requested to client data storing portion 12 is not present (No in SE202), control portion 15 of client device 10 controls communication portion 11 to connect it to data server device 1, and reads the requested data stored in server data storing portion 3 of data server device 1 for providing it (SE204). When access to the server is impossible, the user is notified that obtaining of the server data ended in failure.

When the requested data is present in client data storing portion 12 (Yes in SE202), control portion 15 of client device 10 checks the attribute of the data. For example, when the degree of importance is higher than a predetermined value, or when the data is of the type, in which importance is placed on the immediacy, it is determined that reference to the server data is necessary (Yes in SE203). Control portion 15 of client device 10 controls communication portion 11 to connect it to data server device 1, and reads the requested data stored in server data storing portion 3 of data server device 1 for providing it (SE204). If the access to data server device 1 is impossible, cache data stored in client data storing portion 12 is provided, and the user is notified that the data in the cache is displayed due to a failure in obtaining of the server device.

When the requested data is present in client data storing portion 12 (Yes in SE202), control portion 15 of client device 10 checks the attribute of the data. For example, when the degree of importance is lower than a predetermined value, or when the data is of the type, in which importance is not particularly placed on the immediacy, it is determined that reference to the server data is not necessary (No in SE203). Control portion 15 of client device 10 reads the requested data stored in client data storing portion 12 of client device 10, and provides it (SE205).

In this modification, as described above, when the request for the data registration is issued in response to the user's operation detected by input portion 14, the requested data is provided after determining whether the cache data is present in client device 10 or not.

### Second Embodiment

A second embodiment will now be described with reference to the drawings. The hardware structures, flowcharts and operations other than those to be described below are the same as those in the first embodiment already described, and therefore, description thereof is not repeated.

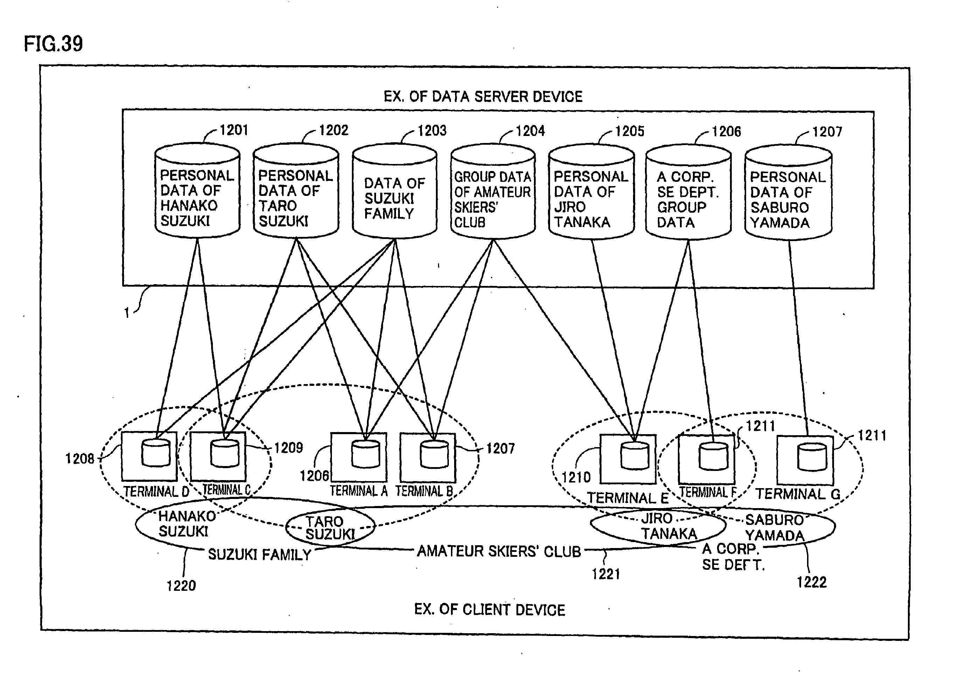

Fig. 39 illustrates a relationship between server data stored in server data storing portion 3 of data server device 1 and client data stored in the plurality of client data storing portions 12 of client devices 10.

In this embodiment, it is assumed that four persons "Taro SUZUKI", "Hanako SUZUKI", "Jiro TANAKA" and "Saburo YAMADA" use this system. "Taro SUZUKI" and "Hanako SUZUKI" have been married, and belong to a "SUZUKI family" group 1220 managed in data server device 1. "Taro SUZUKI" and "Jiro TANAKA" belong to an "amateur skiers' group" group 1221 managed in data server device 1. "Jiro TANAKA" and "Saburo YAMADA" belong to a group of SE department of "A" corporation managed in data server device 1.

"Taro SUZUKI" owns terminals A1206 and B1207 operating as client devices. "Hanako SUZUKI" owns a terminal D1209. "Taro SUZUKI" and "Hanako SUZUKI" own and share a terminal C1208. "Jiro TANAKA" owns a terminal E1210. "Saburo YAMADA" owns a terminal G1212. "Jiro TANAKA" and "Saburo YAMADA" own and share a terminal F1211.

Server data storing portion 3 of data server device 1 has stored a data set of "Hanako SUZUKI" personal data 1201, "Taro SUZUKI" personal data 1202, "SUZUKI family" data 1203, "amateur skiers' group" data 1204, "Jiro TANAKA" personal data 1205, "A corporation SE department" group data 1206 and "Saburo YAMADA" personal data 1207. In Fig. 39, a correlation, which can be expressed by coupling with straight lines, is present between data sets of the server data in data server device 1 and client data in client devices 10.

For example, client data storing portion 12 of terminal A1206 owned by "Taro SUZUKI" has stored a part or the whole of data sets managed in data server device 1, i.e., "Taro SUZUKI" personal data 1202, "SUZUKI family" data 1203 and "amateur skiers' group" data 1204.

In this embodiment, data server device 1 manages three correlations between the server data, which are referred to by client device 10, and attributes thereof, between the client devices, in which the server data is to be reflected, and attributes thereof, and between the users of the client devices and attributes thereof. Base on these attributes, the server data, client devices and users fall into various data categories. For example, the plurality of server data of the same attribute (i.e., the server data to be executed by the same application) fall into the same data category. The client devices of the same attributes (i.e., the client devices using the same communication path between the data server device and the client devices) fall into the same device category. The users of the same attribute (i.e., the users who registered the same liking) fall into the same user category. Data server device 1 stores a table representing correlations between the data categories, device categories and user categories thus classified. Data server device 1 determines the processing to be executed based on this table, the data attribute of the updated data entry, the device attribute of the client device, to which the data update notification must be provided, and the user attribute of the user owning the client device, to which the data update notification must be provided.

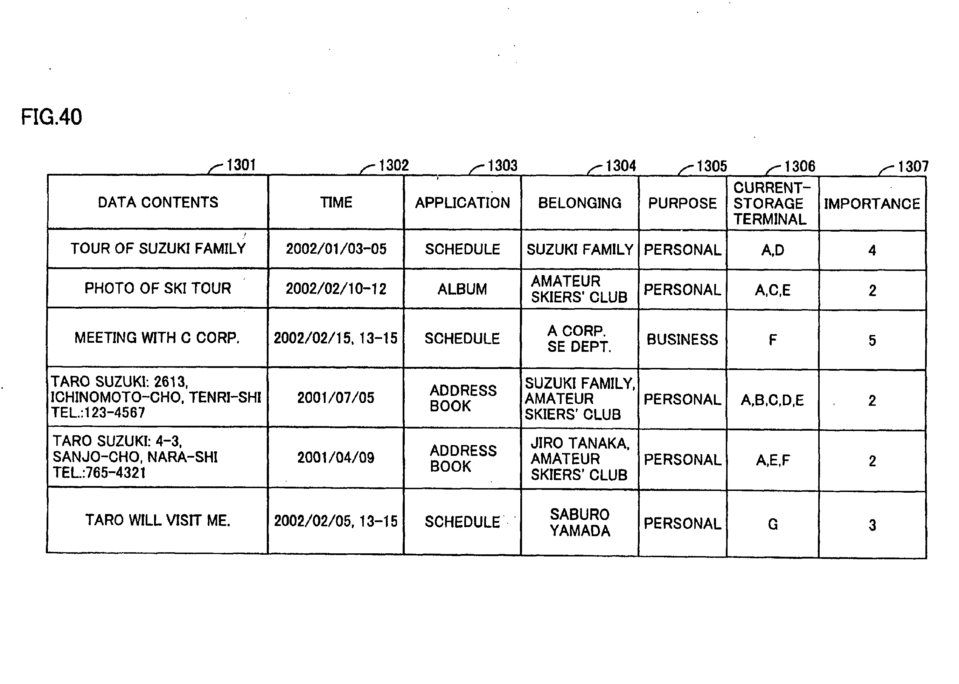

Fig. 40 illustrates, by way of example, storage formats of the server data and attributes thereof, which are stored in server data storing portion 3 of data server device 1. This example is based on the relationship between the respective users, terminals and groups illustrated in Fig. 39.

A schedule application, an address book application and an album application are already installed in some of client devices 10.

The data unit of each row in Fig. 40 is expressed as a "data entry". Each data entry includes data contents 1301, a time attribute 1302, an application attribute 1303, a belong attribute 1304, a purpose attribute 1305, a current-storage terminal attribute 1306 and an importance attribute 1307.

Time attribute 1302 relates to date and time of production of each data entry, date and time of preparation of a schedule entered by the schedule application, and others. Application attribute 1303 indicates the type of data of each data entry, i.e., the attribute of the application handling the data. Belonging attribute 1304 indicates the user or user group, to which each data entry belongs. Purpose attribute 1305 indicates whether each data entry is data for business use or personal use. Current-storage terminal attribute 1306 indicates the terminal, in which each data entry is currently stored. Importance attribute 1307 indicates the degree of importance of the data entry.

These attributes are set to defaults when preparing new data. More specifically, the user attribute of the client device, which prepared the data, is set as the belonging attribute of data. The application, which prepared the data, is set as the application attribute. The degree of importance is set to, e.g., a middle range of "3". Naturally, some of these default attributes, i.e., the user belonging attribute, importance attribute, purpose attribute and others can be changed in accordance with the user's liking. Also, the attributes of already-prepared data can be updated by the owner of the data.

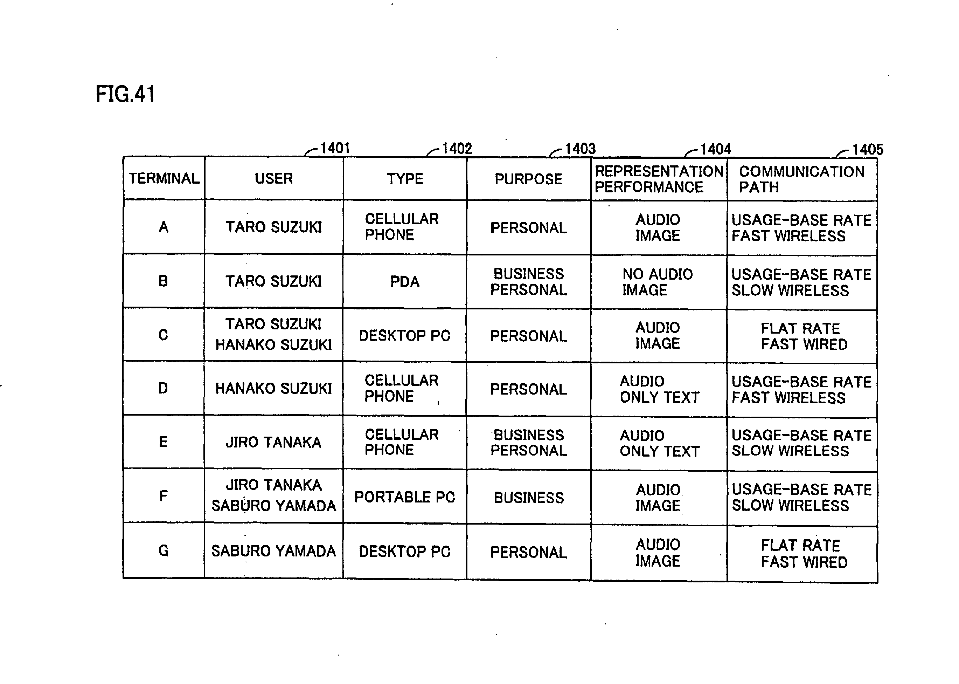

Fig. 41 illustrates the client devices and attributes thereof, which are managed in client storage data managing portion 2 of data server device 1.

Client storage data managing portion 2 of data server device 1 manages the management table for each terminal as illustrated in Fig. 41. This managing table stores a user attribute 1401, a type attribute 1402, a purpose attribute 1403, an expression performance attribute 1404 and a communication path attribute 1405.

User attribute 1401 is provided for each terminal, and indicates a user owning the terminal. Type attribute 1402 indicates the type of the terminal, i.e., a personal computer, a PDA or a cellular phone. Purpose attribute 1403 indicates an intended use or purpose of the terminal. Expression performance attribute 1404 indicates the expression performance of the terminal such as capabilities of audio output and picture display performance. Communication path attribute 1405 indicates whether the wireless communication path is used or not, whether the wired communication path is used or not, whether the communication rate is high or low, and whether the communication is charged at a usage-base rate or a flat rate.

These attributes are added to and registered in the server device through predetermined procedures when registering the client device in this service. In this embodiment, a notification about the attribute relating to the hardware of the client device is automatically provided. The user and purpose of the client device are entered by the user, and thereby a notification about them is provided to the server device.

According to this management table, it can be determined that terminal A is a cellular phone owned by "Taro SUZUKI" for a personal use, and can perform fast wireless communication at a usage-base rate. Terminal A is capable of audio output and image display. It is determined that terminal B is a PDA owned by "Taro SUZUKI" for business and personal uses, and can perform slow wireless communication at a usage-base rate. Terminal B is incapable of audio output, and is capable of image display. It is determined that terminal C is a desktop personal computer owned and shared by "Taro SUZUKI" and "Hanako SUZUKI" for a personal use, and can perform fast wired communication at a flat rate. Terminal C is capable of audio output and image display. It is determined that terminal D is a cellular phone owned by "Hanako SUZUKI" for a personal use, and can perform fast wireless communication at a usage-base rate. Terminal D is capable of audio output, and is capable of only text display. It is determined that terminal E is a cellular phone owned by "Jiro TANAKA" for business and personal uses, and can perform slow wireless communication at a usage-based rate. Terminal E is capable of audio output, and is capable of only text display. Terminal F is a PDA owned and shared by "Jiro TANAKA" and "Saburo YAMADA" for a business use, can perform slow wireless communication at a usage-base rate. Terminal F is capable of audio output and image display. It is determined that terminal G is a desktop personal computer owned by "Saburo YAMADA" for a personal use, and can perform fast wired communication at a flat rate. Terminal G is capable of audio output and image display.

In the terminal shared by users, log-in management or the like is performed to switch the contents provided to each user.

Based on the information received from data server device 1, the terminal can notify the user of the terminal that the data entry was updated, and this notification is performed by sounds, vibrations, screen display or the like. The level or degree of this notification to the user can be changed based on the user notification information received from data server device 1. When the terminal receives "strong user notification" from data server device 1, the terminal notifies the user about the update of data, e.g., by producing a large alarm sound. If the terminal is a cellular phone, the type and volume of ringing sound are automatically changed based on the information received from data server device 1. Data server device 1 changes the manner of user notification to be more noticeable by the user as the degree of importance of the data increases.

Based on the automatic erase information received from data server device 1, the terminal can change the order of possible erasing of the data stored in the storing portion of the terminal. This order of the possible erasing is the order determined for erasing the data in S603 illustrated in Fig. 34. When "likely, automatic erasing" is received from data server device 1, the data is determined as a target for erasing on a priority basis. Therefore, as the degree of importance increases, automatic erasing by the terminal becomes more difficult. As the degree of importance decreases, the automatic erasing manner is set to allow easy erasing.

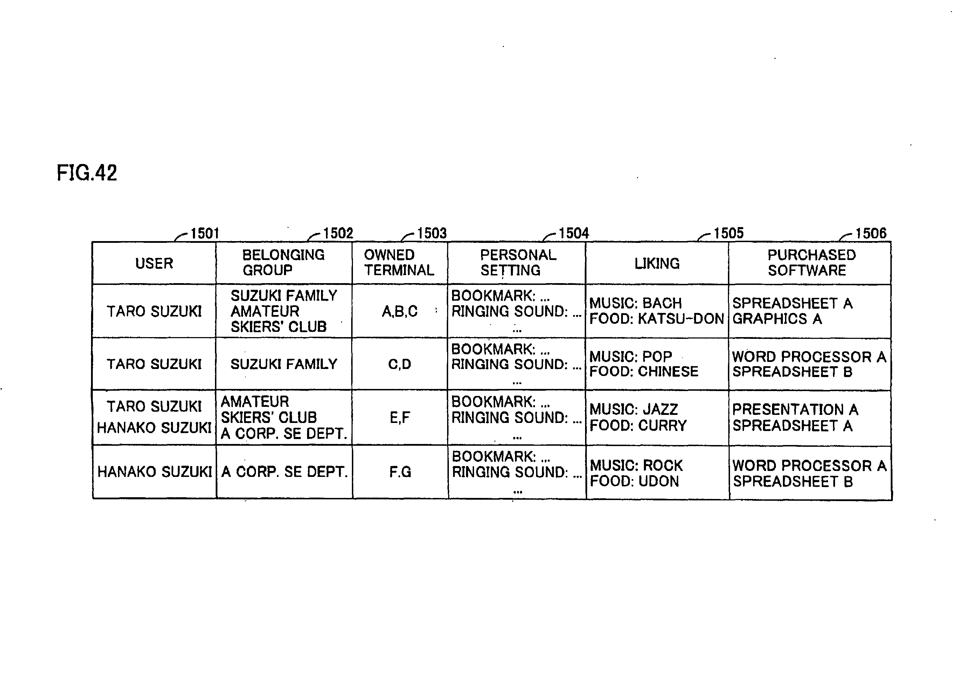

Fig. 42 illustrates, by way of example, storage formats of the users and attributes thereof stored in server data storing portion 3 of data server device 1.

As illustrated in Fig. 42, this table stores, for each user 1501, a user group attribute 1502, an owned terminal attribute 1503, personal setting attribute 1504, a liking attribute 1505 and a purchased software attribute 1506.

User group attribute 1502 indicates a user group, to which the user belongs. Owned terminal attribute 1503 indicates the terminal(s) owned by the user. Personal setting attribute 1504 indicates setting information of an application, which is utilized in the terminal by each of the users, and indicates, e.g., a bookmark and setting of a tool bar. Liking attribute 1505 indicates favorite music, favorite food, hobby and others of the user. Purchased software attribute 1506 indicates applications, which are already purchased by the user and are available on the terminal.

By predetermined procedures using a browser, the user can register these attributes in the server. In this embodiment, the user can freely produce a user group by specifying the users with user IDs or nicknames. When the new group is produced, an inquiry about permission of registration is sent to each group member, and only the members permitting the registration is registered in the new group. The user establishing the group has a right to add or delete the members, and each member has a right to withdraw from the group.

The following can be determined from the table. For example, "Taro SUZUKI" belongs to "SUZUKI family" group and a user group of "amateur skiers' group". "Taro SUZUKI" owns three client devices 10, i.e., terminals A, B and C. The setting of the bookmark and ringing sound personally set by "Taro SUZUKI" are such and such. "Taro SUZUKI" likes music of Bach. "Taro SUZUKI" likes "Katsu-Don". "Taro SUZUKI" has purchased "spreadsheet software A" and "graphic software A".

In three client devices 10, i.e., terminals A, B and C used by "Taro SUZUKI", the common personal setting may be employed. This personal setting specifically includes, e.g., a bookmark of a web browser, setting of tool bars and others of various applications and input setting of a mouse and a keyboard. By employing the common setting, the user can use the plurality of terminals more conveniently. Since terminal C is used by two users "Taro SUZUKI" and "Hanako SUZUKI", the personal setting is managed by log-in processing set for each user. When the user logged in, the setting of the application is managed for this user, and the terminal displays a screen, which reflects various setting for this user.

Server data storing portion 3 of data server device 1 may store in advance the application software for sending it to the client device in response to a request by the client device. In this case, the table in Fig. 42 is used to manage the purchased software in connection with each user. For example, "Taro SUZUKI" has purchased two types of applications, i.e., "spreadsheet software A" and "graphic software B". If these types of software are not installed in terminal A owned by "Taro SUZUKI", data server device 1 can send these types of software to client device 10 for installation. In connection with this, it is assumed that a software dealer has authorize "Taro SUZUKI" to install the software into a plurality of devices owned by one user.

Based on the information about the user's liking, data server device 1 can send information for advertisement or the like matching with the user's liking. For example, the user, who registered "music: Bach" as the liking, is placed in a category of "User likes music and particularly Bach". Data server device 1 sends information relating to "Bach" to the terminals of the users placed in this category.

Only the terminal attribute relating to the owner information or the user attribute relating to the owned terminal attribute may be employed.

In this embodiment, when the data entry stored in server data storing portion 3 of data server device 1 is updated, data server device 1 executes processing determined in accordance with a table, which will now be described, by way of example, with reference to the drawings.

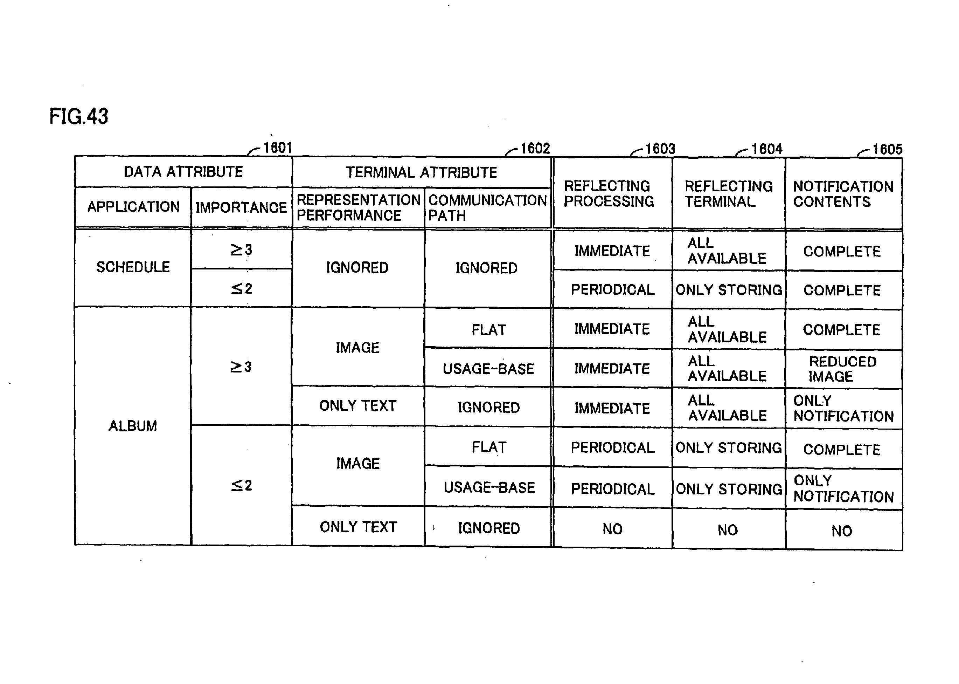

When the data entry stored in server data storing portion 3 of data server device 1 is updated, data server device 1 executes processing, and Fig. 43 illustrates a portion of a table storing attributes and processing for such attributes, which are utilized for determining the processing to be executed by data server device 1. This table is stored in server data storing portion 3 of data server device 1.

For description of the table in Fig. 43, it is assumed that user "Taro SUZUKI" uses terminal C to update the data entry of album data of photographs of a ski tour. '

As illustrated in Fig. 40, this data entry includes the application attribute of "album", belonging attribute of "amateur skiers' group", purpose attribute of "personal", current-storage terminal attribute "A, C, D" and importance attribute of "2". Data server device 1, which received the update notification of this data entry, determines the processing based on the table illustrated in Fig. 43, the data attribute relating to the updated server data and the terminal attribute relating to the terminals, to which the notification about the update is provided. It is understood from the table illustrated in Fig. 43 that the data entry bearing the application attribute of "album" and the importance of "2" is processed as follows. In connection with the terminals, which can display images, and are operable over a communication path charged at a flat rate, the complete data is provided to the terminals, which have stored this data entry, during the periodical communication. In connection with the terminals, which can display images, and are operable over a communication path charged at a usage-base rate, the terminals, which have stored this data entry, are notified of only the fact that the data was updated during the periodical communication. No notification is provided to the terminals, which can display only text display, and cannot display image display.

Referring to Figs. 40 and 41, terminal A is notified of only the fact of the update of data during the periodical communication, because terminal A has the communication path charged at a usage-base rate. Since terminal C has the communication path charged at a flat rate, updated data is completely provided to terminal C during the periodical communication. Since terminal E is incapable of image display, no notification is provided thereto.

Further, description will now be given on the case where the user "Jiro TANAKA" operates terminal F to update the data entry relating to the meeting with the "C" corporation.

As illustrated in Fig. 40, this data entry bears the application attribute of "schedule", belonging attribute of "A corporation, SE department", current-storage terminal attribute of "F" and importance attribute of "5". Data server device 1 receiving this update notification of the data decides the processing based on the table illustrated in Fig. 43, the data attribute of the updated server data and the terminal attribute of the terminal to be notified of the update. As can be seen from the table in Fig. 43, the following processing is executed for the data entry, of which application attribute is "schedule" and the degree of importance is "3". Thus, independently of the attribute of the terminal, the notification is immediately provided to all the terminals utilizing the data entry.

Referring to Figs. 40 and 41, the notification is immediately provided to terminals E and F, which are utilized by "Jiro TANAKA" or "Saburo YAMADA" for the business use.

The processing derived from the table change depending on the likings of the users. Therefore, it is desirable that the user can freely edit the conditions of the attributes and the processing by predetermined operations (e.g., in which the user requests data server device 1 to change registration, and data server device 1 rewrites the table.

In this embodiment, when the data entry stored in server data storing portion 3 of data server device 1 is updated, data server device 1 executes the processing determined in accordance with a table, which will now be described, by way of example, with reference to the drawings.

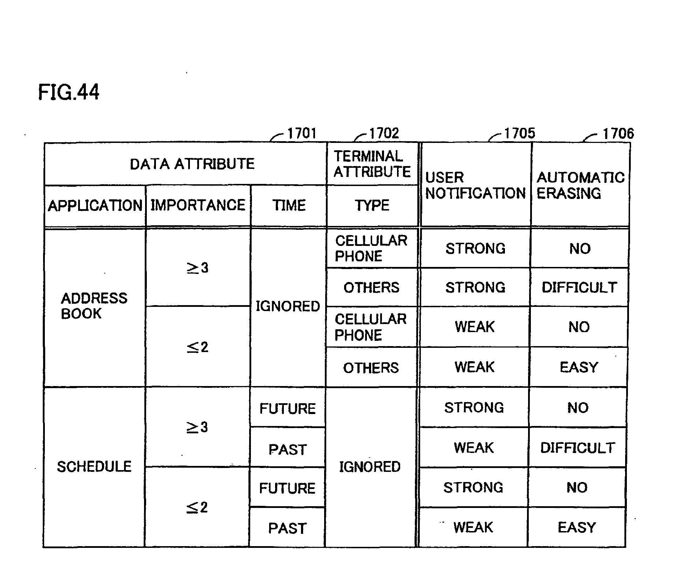

When the data entry stored in server data storing portion 3 of data server device 1 is updated, data server device 1 executes processing, which is determined by utilizing attributes. Fig. 44 partially illustrates a table storing these attributes and the processing for the attributes. This table is stored in server data storing portion 3 of data server device 1.

The table illustrated in Fig. 44 will now be described in connection with the case, in which the user "Jiro TANAKA" operates terminal E to update the data entry of address data.

As illustrated in Fig. 40, this data includes the application attribute of "address book" and the importance attribute of "2". Data server device 1 receiving the notification about the update of this data entry determines the processing based on the table in Fig. 44, the data attribute of the updated server data and the terminal attributes of the terminals to be informed of the update. As can be seen from the table in Fig. 44, when the terminal is a cellular phone, a notification about the update of the data entry is provided to the terminal together with information that the user notification is "weak" and automatic erasing information is "no". When the terminal is not a cellular phone, a notification about the update of the data entry is provided to the terminal together with information that the user notification is "weak" and automatic erasing information is "easy".

The terminal, which received the update of the data entry together with the user notification information and the automatic erasing information, notifies the user about the data updating, e.g., by a sound, and automatically erases the updated data based on the user notification information and the automatic erasing information. This automatic erasing is performed at S603 in Fig. 34.

Description will now be given on the case where the user "Jiro TANAKA" operates terminal F to update the data entry relating to the meeting with the "C corporation".

As illustrated in Fig. 40, this data entry includes the application attribute of "schedule" and importance attribute of "5". Data server device 1 receiving the update notification of this data entry determines the processing based on the table illustrated in Fig. 44, the data attribute of the updated server data and the terminal attribute of the terminal to be notified of the update. When this schedule relates to matters in the future, the update of the data entry is provided to the terminal together with the user notification information of "strong" and the automatic erasing information of "no" regardless of the type of the terminal.

The terminal, which received from data server device 1 the update of data entry together with the user notification information and the automatic erasing information, automatically erases the updated data based on the user notification information and the automatic erasing information.

The processing, which is executed by data server device 1 in accordance with the determination from the table, changes variously depending on an environment of use of the user (e.g., user's setting for temporarily stopping a large audible alarm). Therefore, it is desirable that the above processing executed by data server device 1 can be changed by predetermined operations of the user (e.g., by setting the user notification manner to "only on screen" independently of the notification information received from data server device 1).

In the case where the user, who executed the update, is different from the users of the client devices to be notified of the update, the processing may be different from that in the case where the above two kinds of users are the same. For example, the notification may be performed in the former case, i.e., in the case of the different users, and the notification my not be performed in the latter case.

In the foregoing example, the data server device determines the levels of the user notification and the automatic erasing. Alternatively, the client device may store the table in Fig. 44, and the levels of the user notification and automatic erasing may be determined based on the table thus stored, the attribute of the client device and the attribute of the data received from the data server device.

### Third Embodiment

A third embodiment will now be described with reference to the drawings. The hardware structures, flowcharts and operations other than those described below are the same as those in the second embodiment, and therefore, description thereof is not repeated.

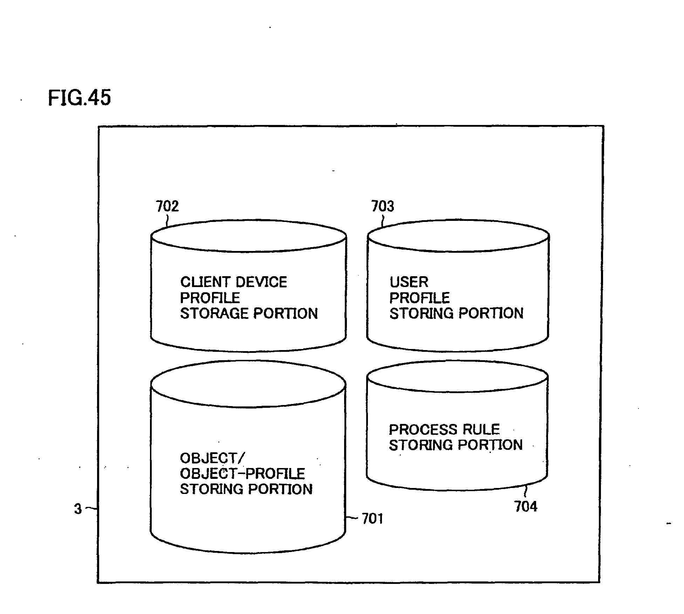

Fig. 45 illustrates contents stored in server data storing portion 3 of data server device 1. In this embodiment, server data storing portion 3 includes an object/object-profile storing portion 701 storing objects to be utilized by client devices 10 and attributes (which may be referred to as "profiles" hereinafter) of the objects, a client device profile storing portion 702 storing attributes of the client devices, a user profile storing portion 703 storing the attributes of the users and a process rule storing portion 704 storing rules for operating the objects in accordance with the respective profiles and other situations.

In this embodiment, it is assumed that each object is a text object structured, e.g., by a description language such an XML (eXtensible Markup Language), and that one object is formed of one or a plurality of element(s).

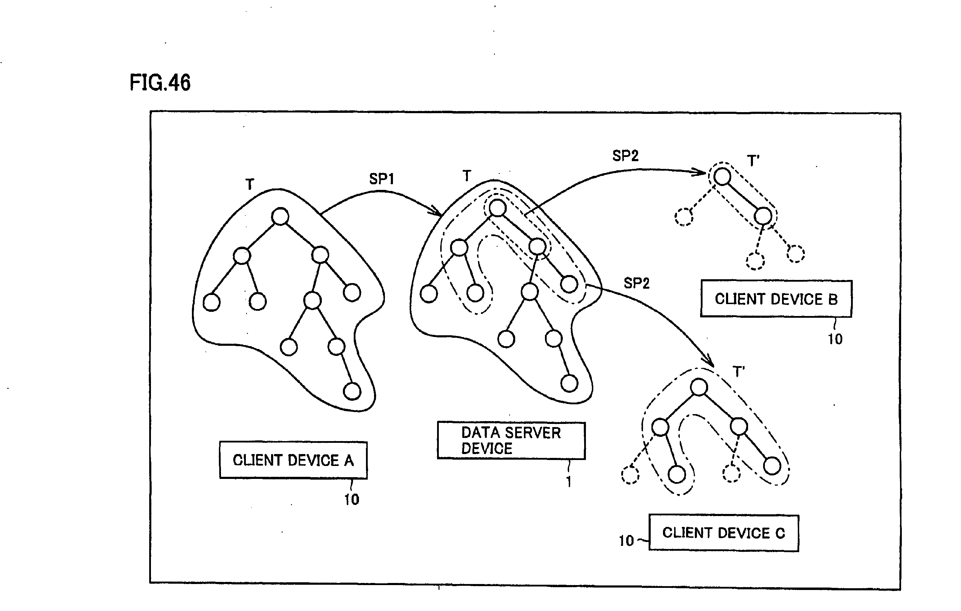

Fig. 46 illustrates a manner, in which a structured object is appropriately propagated to the plurality of client devices 10. More specifically, Fig. 46, illustrates a manner, in which a new object T, which is produced by the user operating client device A, is propagated (as SP1) to server device 1 through data update processing S204 (see Fig. 8) caused by the terminal. Further, Fig. 46 illustrates a manner, in which object T is appropriately processed, and is propagated to client device B and client device C (as SP2) as a result of reflecting processing S105 (see Fig. 5), which is effected by server device 1 on other client devices 10.

In this embodiment, the object, which is structured and is formed of the elements, can be processed an element at a time as illustrated in Fig. 46, and is changed into subsets T' and T" of original object T including root nodes of the object. In this processing, deletion of the element may be actually performed, and alternatively, may be performed by replacing a link to a corresponding element of a master object in server device 1. This processing will be described later.

Server device 1 processes the foregoing object in accordance with various conditions such as profiles, and description will now be given on this processing performed according to various kinds of information illustrated in Fig. 45.

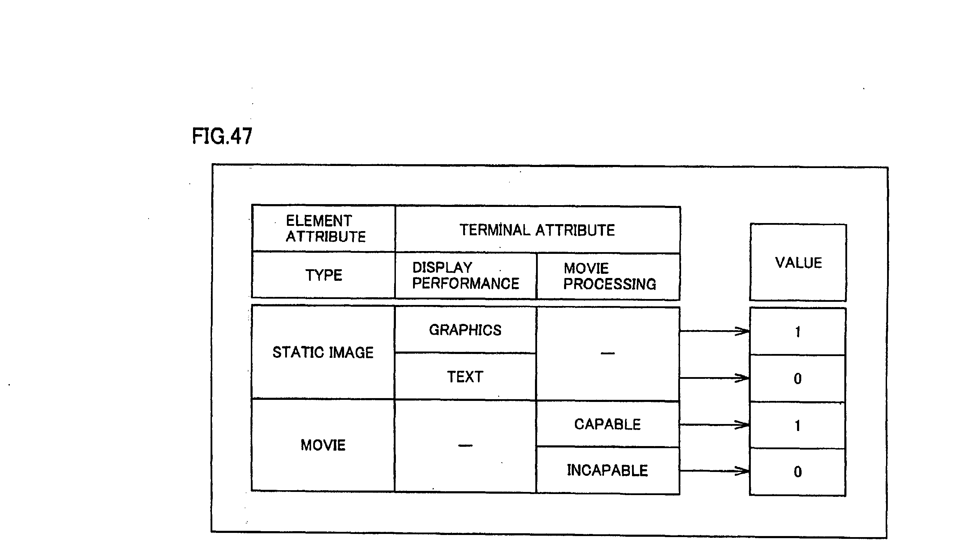

Object/object-profile storing portion 701 stores objects described in structured language. In this embodiment, it is assumed that attributes are assigned to respective objects according to "attribute" of XML. Client device profile storing portion 702 stores the attribute of each client device 10 as illustrated in Fig. 14. User profile storing portion 703 stores each user and its attribute as illustrated in Fig. 42. Process rule storing portion 704 stores tables for updating the objects as well as rules for performing processing when the foregoing objects are processed and propagated, as illustrated in Figs. 47 to 50.

A manner of utilizing these rules will now be described in greater detail.

Fig. 47 fragmentarily illustrates capabilities of client devices 10 and a capability matching function having outputs of Boolean, which express the matching properties of the objects with respect to the elements. According to Fig. 47, when the type attribute of the element of the object is, e.g., a "static image", the above function returns "1" if the display performance attribute of the terminal is "graphics", and returns "0" if the terminal is capable of text display. When the element type attribute is movie", this function returns "1" if the movie processing attribute of the terminal is "capable", and returns "0" if "incapable". In this manner, this function refers to the appropriate terminal attribute for expression based on the type attribute of the element, and returns a Boolean value representing the matching or mismatching. If the terminal can deal with it owing to the processing or manipulation such as format converting processing or simplifying processing (e.g., subtractive color processing) by the server, the function returns "1". The function is expressed as "Fca(x)" where "x" is an input element.

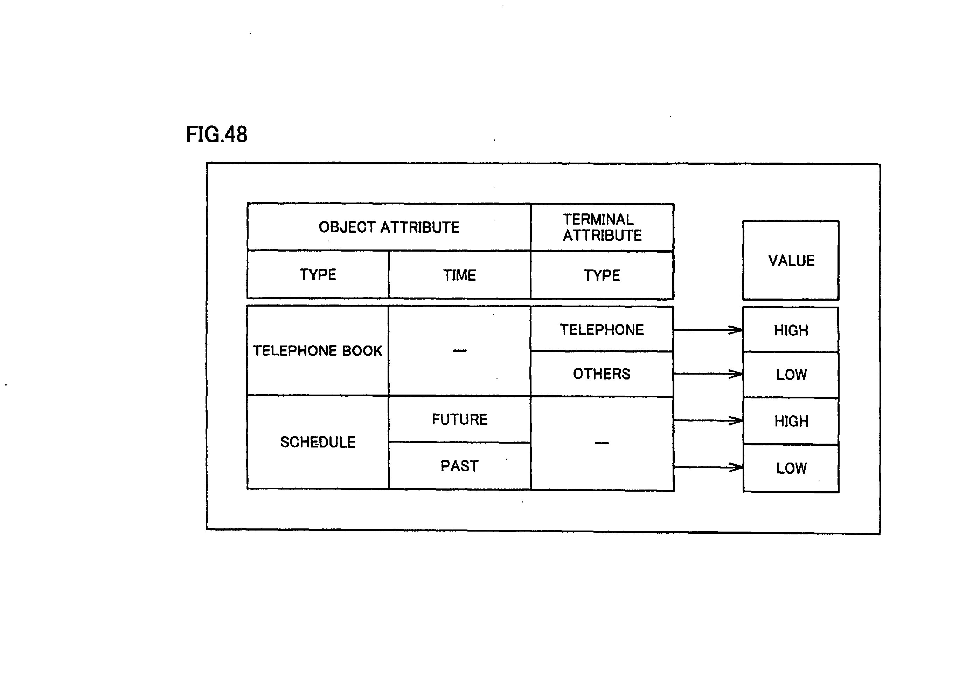

Fig. 48 illustrates a part of functions, of which output value varies based on properties of matching between a certain object and an environment around the object. When the type attribute of the object is, e.g., "telephone book", the function returns a high value if the type attribute of client device 10 storing this object is "telephone", and returns a low value if the type attribute is "terminal" other than the telephone. When the type attribute of the object is "schedule", the function returns a high value if the time attribute of the object is "future", and returns a low value if the time attribute is "past". In this manner, the function refers to the appropriate attribute and environment related to the object, depending on the type attribute of the object, and returns properties of matching between the object and the environment around the object. The function is expressed as "Fcc(T)" where "T" is an input formed of the object.

A function for deriving the importance attribute of object T is expressed as "Imp(T)", and an opportunity priority is defined as OP = Fcc(T)·Imp(T). In this embodiment, these functions are used, and an object of a subset including a root node of a master object is prepared from the master object in accordance with an algorithm, e.g., of "seek a subset Tsub of {x ∈ T I Fca(x) ≠ 0} such that OP - (C·Σ size(x of Tsub))/Sc", where "Sc" represents a value representing a communication capability of client device 10 transferring the object, and more specifically represents a value such as a ratio of (communication charge)/(communication amount) or a communication speed. "Size" is a function for deriving a size of element "x". If the simplifying processing or the format converting processing is performed, this function returns the size of the element after such processing. "C" is a constant for adjusting a balance between the communication cost and the opportunity priority of the object. In this embodiment, elements are deleted in accordance with this algorithm such that the element is actually deleted if Fca(x) is "0", and a link to server device 1 is replaced if Fca(x) is "1". Under predetermined conditions, a processing method determined aside from the above processing method is executed on a top-priority basis so that it is possible to deal with a unique personal request of the user as well as a special situation.

Then, the propagation priority is defined as PP = OP ·Ntf(T, D) ·Act(D), where "Ntf" is a function representing, e.g., in connection with a certain client device 10, whether the user of terminal D is notified of the last update of object T or not. If already notified, this function takes a value of "1". If not, it takes a value of "2". "Act(D)" is a function representing a state of activation or operation of a certain terminal (D). This function takes a value of "2" if the terminal is on, and takes a value of "1" if off.

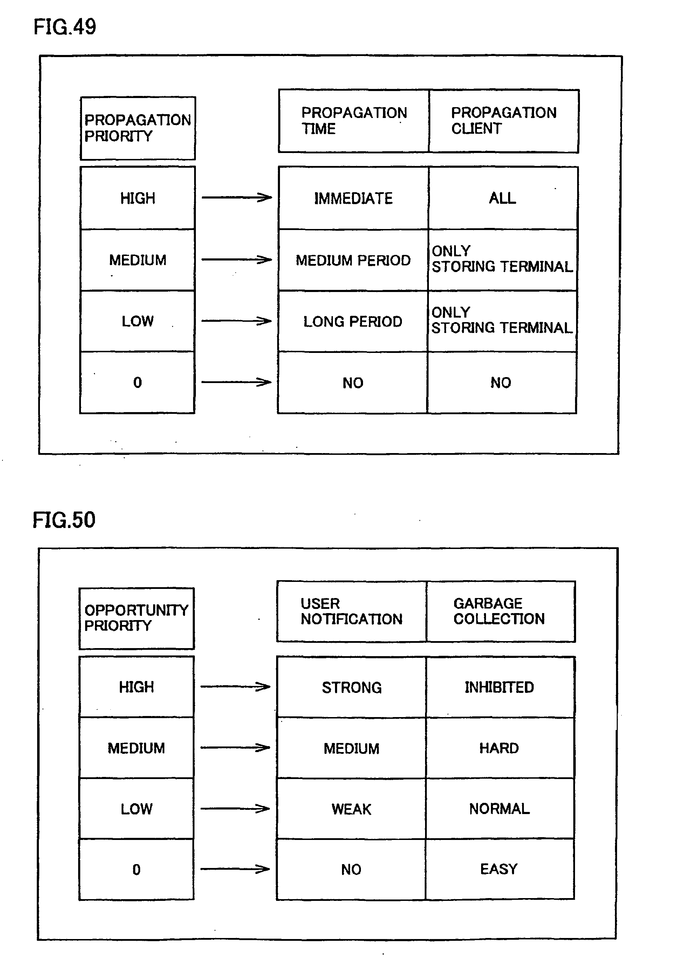

Fig. 49 illustrates a correlation between the value of propagation priority PP and the processing of the object. According to the rules illustrated in Fig. 49, the object, which has a high opportunity priority and is in such a state that a notification of the last update thereof is not provided, is propagated more quickly to more terminals, and can be propagated particularly quickly to the operating terminal. Under predetermined conditions, a propagation method determined aside from this propagation method is executed on a top-priority basis so that it is possible to deal with a unique personal request of the user as well as a special situation.

Fig. 50 illustrates rules for producing attributes, which are used for defining the processing effected on the object in the terminal, and specifically for producing the user notification attribute of the object as well as a garbage collection attribute. According to the rules illustrated in Fig. 50, an intensity of the user notification in the terminal as well as a policy of the garbage collection can be determined from the opportunity priority. Under predetermined conditions, a processing policy determined aside from this processing policy is executed on a top-priority basis so that it is possible to deal with a unique personal request of the user as well as a special situation.

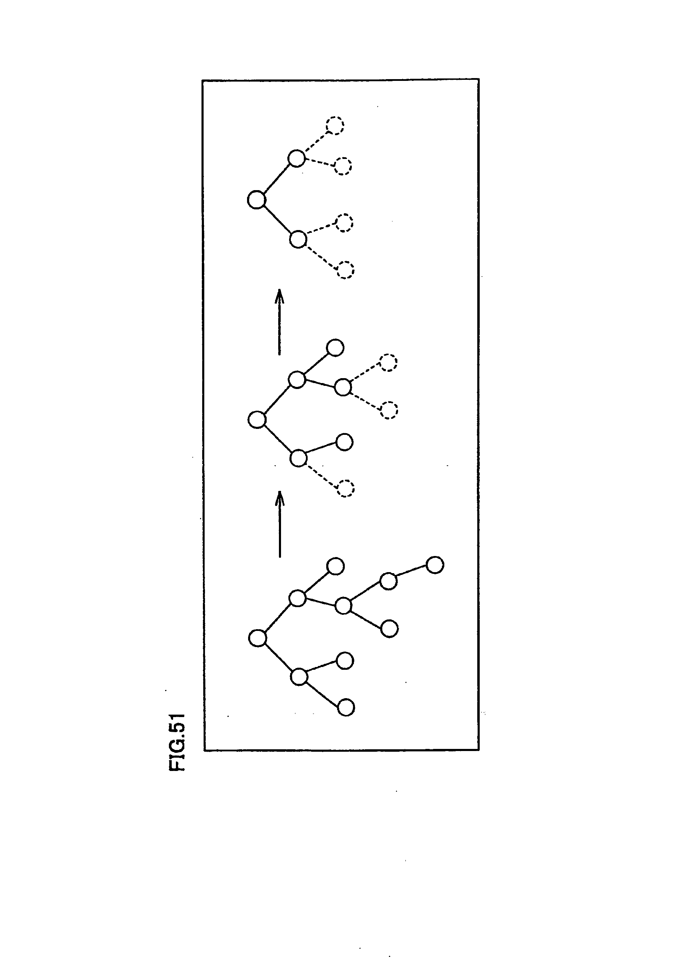

The processing of determining the deletion target data and deleting it as illustrated in Fig. 34 is effected on the elements of the structured object as illustrated in Fig. 51, and particularly is effected element by element in an order starting from the element at the trailing end of the object. Also, the element to be deleted by the deleting processing is replaced with the link to the corresponding element of the master object in server device 1. Thereby, the availability of the object becomes high, resulting in effective processing.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

According to this data access system, as described above, the client device updates the data, and notifies the serve about it. The server performs the data updating on only the client devices storing the data corresponding to the updated data. Therefore, the client devices can utilize information much larger in amount than the actual storage capacity without increasing network traffic. Accordingly, the data access system according to the invention is suitable to the server-client system, in which many users share the data.

## Claims

1. A data server device comprising:
a server data storing portion (3) storing server data to be utilized by one or a plurality of client device(s) (10) and a correlation between said server data and the client device(s) (10); and
a client storage data managing portion (2) connected to said server data storing portion (3) and managing client data currently stored in said client device (10).

2. A data server device comprising:
a server data storing portion (3) storing server data to be utilized by one or a plurality of client device(s) (10) and a correlation between said server data and the client device(s) (10); and
a client storage data managing portion (2) connected to said server data storing portion (3), managing client data currently stored in said client device (10), and updating the client data currently stored in said client device (10) capable of access to said server data when the server data stored in said server data storing portion (3) is updated.

3. The data server device according to claim 1 or 2, wherein
said client storage data managing portion (2) manages a state of matching between the client data currently stored in said client device (10) and the server data stored in said server data storing portion (3).

4. The data server device according to claim 1 or 2, wherein
the server data stored in said server data storing portion (3) includes a client device identifier for identifying the client device (10) capable of said access.

5. The data server device according to claim 1 or 2, wherein
the server data stored in said server data storing portion (3) includes a user identifier for identifying a user owning the client device (10) capable of said access.

6. The data server device according to claim 1 or 2, wherein
said client storage data managing portion (2) manages a correlation between an identifier for identifying a user owning said client device (10) and a group including the user, and
the server data stored in said server data storing portion (3) includes a group name of the accessible group.

7. The data server device according to claim 1 or 2, wherein
said client storage data managing portion (2) records an update history in a communication queue when communication with said client device (10) is impossible in an operation of updating said client data.

8. The data server device according to claim 1 or 2, wherein
said client storage data managing portion (2) will attempt communication with said client data at predetermined intervals when the communication with said client device (10) is impossible in processing of updating said client data.

9. The data server device according to claim 1 or 2, wherein
the server data stored in said server data storing portion (3) is assigned a degree of importance, and
said client storage data managing portion (2) updates said client data in accordance with said degree of importance.

10. The data server device according to claim 1 or 2, wherein
said client storage data managing portion (2) operates for said client device (10) capable of accessing the server data stored in said server data storing portion (3) to execute selectively updating of said client data or notification to said client device (10) in accordance with a type of said client device (10) when said server data is updated.

11. The data server device according to claim 1 or 2, wherein
said client storage data managing portion (2) operates for said client device (10) capable of accessing the server data stored in said server data storing portion (3) to execute selectively updating of said client data or notification to said client device (10) in accordance with an attribute of the updated server data when the server data is updated.

12. The data server device according to claim 1 or 2, wherein
said client storage data managing portion (2) executes an encryption procedure and an authentication procedure when performing communication with said client device (10).

13. The data server device according to claim 1 or 2, wherein
access to said server data storing portion (3) from a portion other than said client device (10) is allowed.

14. A client device comprising:
a client data storing portion (12) storing client data formed of a part or a whole of server data stored in a server data storing portion (3) of a data server device (1); and
a control portion (15) connected to said client data storing portion (12), determining whether intended data is stored in said client data storing portion (12) or not, and reading the data from said client data storing portion (12) or said server data storing portion (3) of the data server device (1) based on results of the determination for utilizing the read data.

15. The client device according to claim 14, wherein
when the data stored in said client data storing portion (12) is deleted, said control portion (15) notifies said data server device (1) of the deletion.

16. The client device according to claim 15, wherein
said control portion (15) will attempt communication with said data server device (1) at predetermined intervals when communication with said data server device (1) is impossible.

17. The client device according to claim 15 or 16, wherein
said control portion (15) changes conditions relating to whether the client data stored in said client data storing portion (12) can be deleted or not, depending on an attribute of said server data stored in said server data storing portion (3) of said data server device (1).

18. The client device according to claim 16, wherein
said control portion (15) changes conditions relating to whether the client data stored in said client data storing portion (12) can be deleted or not, depending on an attribute of the client data stored in said client data storing portion (12).

19. The client device according to claim 14, wherein
said control portion (15) updates the server data stored in said server data storing portion (3) of said data server device (1) when the client data stored in said client data storing portion (12) is updated.

20. The client device according to claim 14, wherein
said control portion (15) adds the server data to said server data storing portion (3) of said data server device (1) when the client data is added to said client data storing portion (12).

21. The client device according to claim 14, wherein
said control portion (15) stores an updating history in a communication queue when communication with said data server device (1) is impossible.

22. The client device according to claim 19 or 20, wherein
when communication with said data server device (1) is impossible, said control portion (15) will perform the communication after it is detected that the communication with said data server device (1) becomes possible.

23. The client device according to claim 19, wherein
the client data stored in said client data storing portion (12) is assigned a degree of importance, and
said control portion (15) selectively executes or does not execute the updating of the server data stored in said server data storing portion (3) of said data server device (1) based on the degree of importance when the client data stored in said client data storing portion is updated.

24. The client device according to claim 20, wherein
the client data stored in said client data storing portion (12) is assigned a degree of importance, and
said control portion (15) selectively adds or does not add the server data to said server data storing portion (3) of said data server device (1) based on the degree of importance when said client data is added to said client data storing portion (12).

25. The client device according to claim 14, wherein
said control portion (15) notifies the user of the updating of said client data when the client data stored in said client data storing portion (12) is updated by reflecting the update of the server data in said server data storing portion (3) of said data server device (1).

26. The client device according to claim 14, wherein
said control portion (15) executes an encryption procedure and an authentication procedure for communication with said data server device (1).

27. A data access system comprising:
the data server device (1) according to claim 1 or 2; and
the client device (10) recited in claim 14 and connected to said data server device (1) over a network.

28. The data access system according to claim 27, wherein
the server data stored in said server data storing portion (3) of said data server device (1) includes an application program.

29. The data access system according to claim 27, wherein
the server data stored in said server data storing portion (3) of said data server device (1) includes a configuration file of the application program.

30. A data synchronizing method of synchronizing server data and client data, being used in a data access system including a data server device (1) storing the server data to be utilized by one or a plurality of client device(s) (10) and a correlation between said server data and the client device(s) (10), and a client device (10) connected to said data server device (1) over a network, and storing the client data formed of a part or the whole of the server data, and comprising the steps of:
determining a state of matching between the server data stored in said data server device (1) and the client data stored in said client device (10) by said data server device (1);
providing a notification about data updating to said data server device (1) when the client data stored in said client device (10) is updated;
providing a notification about the fact of updating of the data to other client device(s) storing, as said client data, data including an updated portion of the data when said data server device (1) receives the notification about the data updating from said client device (10); and
updating the client data of said other client device (10).

31. A computer-readable record medium storing a program for achieving a data server function by a computer, said program providing the computer with functions as:
server data storing means for storing server data to be utilized by one or a plurality of client device(s) (10) and a correlation between said server data and the client device(s) (10); and
client storage data managing means for managing client data currently stored in said client device (10).

32. A computer-readable record medium storing a program for achieving a data server function by a computer, said program providing the computer with functions as:
server data storing means for storing server data to be utilized by one or a plurality of client device(s) (10) and a correlation between said server data and the client device(s) (10); and
client storage data managing means for managing client data currently stored in said client device (10), and updating the client data currently stored in said client device (10) capable of accessing the server data stored in said server data storing means when said server data is up dated.

33. A computer-readable record medium storing a program for achieving a client function by a computer, said program providing the computer with functions as:
client data storing means for storing client data formed of a part or the whole of server data stored in a server data storing portion (3) of a data server device (1); and
control means for determining whether said client data storing portion has stored intended data or not, and reading the data from said server data storing portion (3) of said data server device (1) or said data server device (1) based on results of the determination for utilizing the data.

34. A data server device comprising:
a server data storing portion (3) storing server data to be utilized by one or a plurality of client device(s) (10) and a correlation between said server data and the client device(s) (10); and
a processing determining portion connected to said server data storing portion (3) for determining processing for the client data stored in the client device (10) based on said correlation.

35. The data server device according to claim 34, further comprising:
a client device data storing portion storing client device data representing features of said client devices (10), wherein
said client devices fall into a plurality of categories based on said client device (10) data,
said server data fall into a plurality of data categories based on said server data, and
said server data storing portion (3) establishes correspondence between said data categories and said device categories for storing the correlation between said server data and said client device(s) (10).

36. The data server device according to claim 34, further comprising:
a user data storing portion storing user data representing features of users using said client devices (10), wherein
said users fall into a plurality of user categories based on the user data,
said server data fall into a plurality of data categories based on said server data, and
said server data storing portion (3) establishes the correspondence between said data categories and said user categories, and stores the correlation between said server data and said client devices.

37. The data server device according to claim 35, wherein
said server data fall into the plurality of data categories based on at least one of a type of an application utilizing said server data, a degree of importance of the data and a data notifying method.

38. The data server device according to claim 35, wherein
said client device (10) fall into the plurality of device categories based on at least one of a type of said client device (10), a display performance of said client device (10) and a type of a communication path between said data server device (1) and said client device (10).

39. The data server device according to claim 36, wherein
the users fall into the plurality of user categories based on at least one of a group containing said user, liking of said user and user's setting information in said client device (10).

40. The data server device according to claim 39, wherein
said group containing the user can be prepared, edited and deleted by said client device(s) (10), and
said data server device further comprises:
an inquiring portion sending an inquiry to the related client device (10) about whether registration in a new group is possible or not, when said new group is prepared; and
a group registering portion responding to the inquiry by the inquiring portion by registering, in said new group, the user of said client device (10) responding that the registration is possible.

41. The data server device according to any one of claims 34 to 36, wherein
said processing determining portion determines processing such that data updating the client data currently stored in said client device (10) as well as notification information representing a method determined based on said correlation for notifying the user about the fact of updating of the client data are sent to the client device (10) extracted based on said correlation.

42. The data server device according to any one of claims 34 to 36, wherein
said processing determining portion determines processing such that data updating said client data currently stored in the client device (10) as well as erasing information representing a method determined based on said correlation for erasing the updated client data are sent to said client device (10) extracted based on the correlation.

43. The data server device according to any one of claims 34 to 39, wherein
said processing determining portion calculates opportunity priority and propagation priority based on an algorithm determined corresponding to an attribute of said server data and an attribute of said client device (10), and determines processing to be effected on the client data based on the calculated opportunity priority and the calculated propagation priority.

44. The data server device according to any one of claims 34 to 39, wherein
said processing determining portion determines processing to be effected on client data by selecting an element from a plurality of element included in structured data for a communication data to be sent to the client device (10).

45. A client device comprising:
a client data storing portion (12) storing client data formed of a part or the whole of server data stored in a server data storing portion (3) of a data server device (10);
a receiving portion receiving update information including updated client data and notification information from said data server device (1);
a notifying portion notifying a user of said client device that the client data was updated; and
a control portion (15) connected to said client data storing portion (12), said receiving portion and said notifying portion, and controlling said client data storing portion (12) and said notifying portion to store the updated client data included in the update information received by said receiving portion in said client data storing portion (12), and notify the user about the updating of said client data, based on the notification information included in the update information.

46. The client device according to claim 45, further comprising:
an erase processing portion erasing the client data stored in said client data storing portion (12) in a stepwise fashion.

47. The client device according to claim 45, further comprising:
an erase processing portion erasing the client data stored in said client data storing portion (12), and setting information of linking with master data in said data server device (1) in response to the erasing of said client data.

48. A client device comprising:
a client data storing portion (12) storing client data formed of a part or the whole of server data stored in a server data storing portion (3) of a data server device (10);
a receiving portion receiving update information including updated client data and erase information from said data server device (1); and
a control portion (15) connected to said client data storing portion (12) and said receiving portion, and controlling said client data storing portion (12) to store the updated client data included in the update information received by said receiving portion in said client data storing portion (12), and erase the client data stored in said client data storing portion (12) based on the erase information included in said update information.

49. A data access system comprising:
the data server device (1) according to any one of preceding claims 34 to 40; and
the client device (10) recited in claim 45 or 48, and connected to said data server device (1) over a network.

50. A data synchronizing method used for synchronizing server data and client data with each other in a data access system including a data server device (10) storing said server data to be utilized by one or a plurality of client device(s) (10) and a correlation between said server data and said client device(s) (10), and said client device(s) (10) connected to said data server device (1) and storing said client data formed of a part or the whole of said server data, said data synchronizing method comprising the steps of:
notifying, by said client device (10), said data server device (1) about updating of the client data when the client data stored in said client device (10) is updated;
extracting the client device (10) as a receiver of information relating to the updating of the client data based on said correlation when said data server device (1) is notified of the data updating by said client device (10);
sending, by said data server device (1), the information relating to the update of said client data to said extracted client device;
receiving the information relating to said update and sent from said data server device (1) by said client device (10); and
updating said client data by said client device (10) based on the received information relating to said update.

51. The data synchronizing method according to claim 50, wherein
said step of sending said information relating to the update by said data server device (1) includes a step of sending update information including data updating the client data currently stored in said client device (10) and notification information representing a method, determined based on said correlation, of notifying the user about the fact of the update of said client data, and
said data synchronizing method further includes a step of notifying the user about the updating of said client data based on the notification information included in said update information.

52. The data synchronizing method according to claim 50, wherein
said step of sending said information relating to the update by said data server device (1) includes a step of sending update information including data updating the client data currently stored in said client device (10) and erase information representing a method, determined based on said correlation, of erasing the updated client data, and
said data synchronizing method further includes a step of erasing the updated client data based on the erase information included in said update information.

53. A computer-readable record medium storing a program for achieving a data server function by a computer, said program providing the computer with functions as:
server data storing means for storing server data to be utilized by one or a plurality of client device(s) (10) and a correlation between said server data and the client device(s) (10); and
processing determining means for determining processing to be effected on the client data stored in the client device (10) based on said correlation.

54. A computer-readable record medium storing a program for achieving a client function by a computer, said program providing the computer with functions as:
client data storing means for storing client data formed of a part or the whole of server data stored in a server data storing portion (3) of a data server device (1);
receiving means for receiving update information including updated client data and notification information from said data server device (1);
notifying means notifying a user of said client device (10) that the client data was updated; and
control means controlling said client data storing means and said notifying means to store the updated client data included in the update information received by said receiving means in said client data storing means, and notify the user about the updating of the client data based on the notification information included in said update information.

55. A computer-readable record medium storing a program for achieving a client function by a computer, said program providing the computer with functions as:
client data storing means for storing client data formed of a part or the whole of server data stored in a server data storing portion (3) of a data server device (1);
receiving means for receiving update information including updated client data and notification information from said data server device (1); and
control means controlling said client data storing means to store the updated client data included in the update information received by said receiving means in said client data storing means, and erase the client data stored in said client data storage means based on the erasing information included in said update information.
